# EUROPEAN PATENT APPLICATION

(11) **EP 4 819 752 A1**
(43) Date of publication of application: **07.10.2026**
(21) Application number: 25215637.7
(22) Date of filing: 13.11.2025
(51) Int. Cl.: H04W 74/0833

(54) **COMMUNICATION METHOD OF APPARATUS AND APPARATUS THEREOF AT AMBIENT IOT**

(30) Priority: 04.04.2025 KR 20250044391; 21.07.2025 KR 20250098523
(71) Applicant: Industry-University Cooperation Foundation Hanyang University ERICA Campus, Ansan-si, Gyeonggi-do 15588 (KR)
(72) Inventor: Hu, JIN, 15588 Ansan-si Gyeonggi-do (KR); Shilun, SONG, 15588 Ansan-si Gyeonggi-do (KR); Huiyang, XIE, 15588 Ansan-si Gyeonggi-do (KR)
(74) Representative: Bryn Aarflot AS

(57) **Abstract**

The present specification may provide a communication method of a terminal and the terminal including transmitting a random ID through message 1 over one of one or more available frequency channels in one or more message 1 occasions, receiving the random ID from a specific reader through message 2 if the random ID is determined to be valid by the specific reader, and transmitting its own unique ID through message 3.

## Description

### CROSS-REFERENCE TO RELATED APPLICATION

The instant patent application claims priority under 35 U.S.C. 119(a) to Korean Patent Application Nos. 10-2025-0044391 and 10-2025-0098523, filed on April 4, 2025 and July 21, 2025, respectively, in the Korean Intellectual Property Office, the disclosures of which are herein incorporated by reference in their entireties. The present patent application claims priority to other applications to be filed in other countries, the disclosures of which are also incorporated by reference herein in their entireties.

### Technical Field

The present embodiments relate to a communication method and a terminal in an ambient IoT.

### Related Art

The 3GPP is designing a frame structure, channel coding and modulation, waveform and multiple access scheme, etc. for new radio (NR). NR requires a design for meeting various QoS requirements required for each of usage scenarios more broken down and specified and enhanced data rate as compared with LTE.

As representative usage scenarios of NR, enhancement mobile broadband (eMBB), massive machine type communication (mMTC), and ultra-reliable and low latency communications (URLLC) have been defined and, to meet the requirements for each usage scenario, a flexible frame structure as compared with LTE needs to be designed.

Ambient IoT is a portmanteau of Ambient and Internet of Things. It is used in the technology industry to refer to an ecosystem of numerous objects, all connected to a wireless sensor network using inexpensive, self-driving sensor nodes.

In the ambient IoT, a terminal does not directly generate and transmit RF signals, but instead reflect and transmit signals from a reader. This technology, which enables lower cost (less than a few cents per terminal), smaller size (the size of a coin), and minimized maintenance, is attracting attention as a technology applicable to various industries.

However, in the ambient IoT, the time and frequency resources of terminals and readers are limited, and therefore, there is a growing need for efficient use.

### SUMMARY

Embodiments of the disclosure may provide a communication method and a terminal for a terminal in an ambient IoT that utilizes the time and frequency resources of terminals and readers more efficiently.

In an aspect, the present embodiments may provide a communication method of a terminal comprising: transmitting a random ID through a message 1 over one of one or more available frequency channels in one of one or more message 1 occasions, receiving the random ID from specific reader through a message 2 if the random ID is determined to be valid by the specific reader and transmitting its own unique ID through a message 3.

In the other aspect, the present embodiments may provide a terminal comprising: a transmitter configured to transmit a random ID through a message 1 over one of one or more available frequency channels in one of one or more message 1 occasions and transmit its own unique ID through a message 3, a receiver configured to receive the random ID from specific reader through a message 2 if the random ID is determined to be valid by the specific reader and a controller configured to control the transmitter and receiver.

According to an embodiment of the present invention, there may be provided a method and device which can more efficiently use the time and frequency resources of the terminal and the reader in ambient IoT.

### BRIEF DESCRIPTION OF THE DRAWINGS

FIG. 1 is a view schematically illustrating a structure for an NR wireless communication system to which the present embodiments may apply.
FIG. 2 is a view illustrating a frame structure in an NR system to which the present embodiments may apply.
FIG. 3 is a view illustrating a resource grid supported by radio access technology to which the present embodiments may apply.
FIG. 4 is a view illustrating a bandwidth part supported by radio access technology to which the present embodiments may apply.
FIG. 5 is a view exemplarily illustrating a synchronization signal block in radio access technology to which the present embodiments may apply.
FIG. 6 is a view illustrating a random access procedure in radio access technology to which the present embodiments may apply.
FIG. 7 is a view illustrating a CORESET.
FIG. 8 is a diagram illustrating the configuration of a base station according to another embodiment.
FIG. 9 is a diagram illustrating the configuration of a user terminal according to another embodiment.
FIGs. 10A and 10B illustrate two energy usage methods.
FIGs. 11A through 11D illustrate connectivity topologies between a base station and a terminal.
FIG. 12 illustrates the relationship between a Type 1 terminal of FIG 10 and Topology 1 of FIG 11A.
FIGs. 13A and 13B illustrate a similar random access procedure in an RFID system.
FIGs. 14 to 20 are diagrams illustrating the operations of an ambient IoT according to some embodiments.
FIG. 21 is a flowchart of communication method of a terminal according to another embodiment.

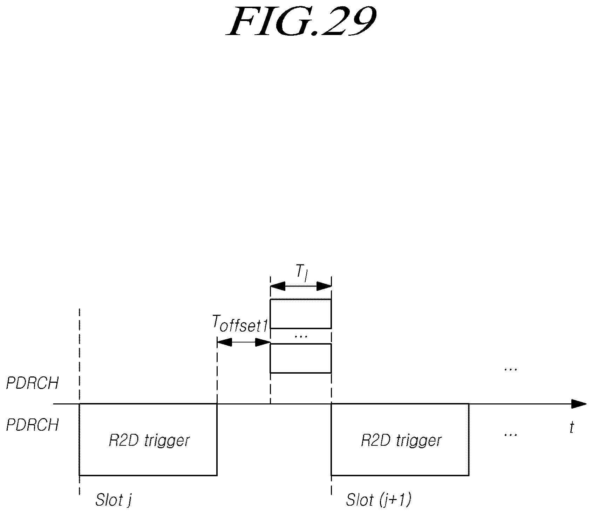

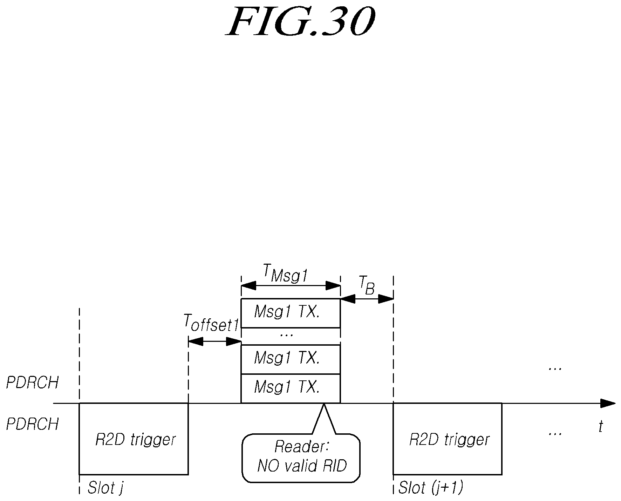

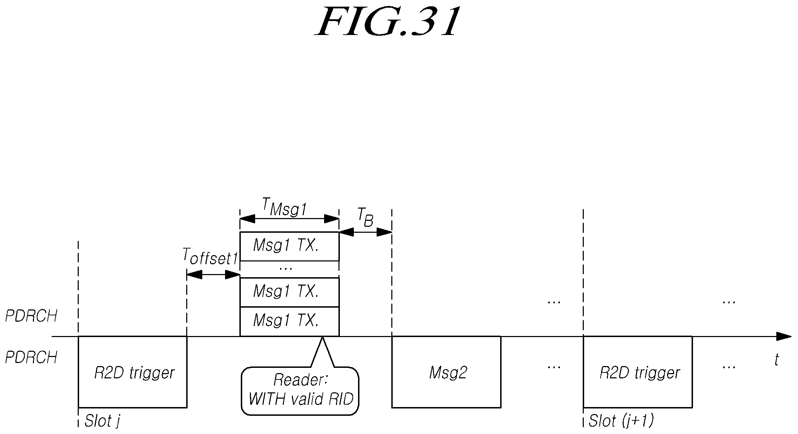

FIGs. 22 to 36 are diagrams illustrating the operations of an ambient IoT according to some embodiments.
FIG. 37 is a flowchart of a communication method of a terminal according to another embodiment.

### DETAILED DESCRIPTION

Hereinafter, embodiments of the disclosure are described in detail with reference to the accompanying drawings. In assigning reference numerals to components of each drawing, the same components may be assigned the same numerals even when they are shown on different drawings. When determined to make the subject matter of the disclosure unclear, the detailed of the known art or functions may be skipped. The terms "comprises" and/or "comprising," "has" and/or "having," or "includes" and/or "including" when used in this specification specify the presence of stated features, regions, integers, steps, operations, elements, and/or components, but do not preclude the presence or addition of one or more other features, regions, integers, steps, operations, elements, components, and/or groups thereof. As used herein, the singular forms "a", "an" and "the" are intended to include the plural forms as well, unless the context clearly indicates otherwise.

Such denotations as "first," "second," "A," "B," "(a)," and "(b)," may be used in describing the components of the present invention. These denotations are provided merely to distinguish a component from another, and the essence, order, or number of the components are not limited by the denotations.

In describing the positional relationship between components, when two or more components are described as "connected", "coupled" or "linked", the two or more components may be directly "connected", "coupled" or "linked" ", or another component may intervene. Here, the other component may be included in one or more of the two or more components that are "connected", "coupled" or "linked" to each other.

When such terms as, e.g., "after", "next to", "after", and "before", are used to describe the temporal flow relationship related to components, operation methods, and fabricating methods, it may include a non-continuous relationship unless the term "immediately" or "directly" is used.

When a component is designated with a value or its corresponding information (e.g., level), the value or the corresponding information may be interpreted as including a tolerance that may arise due to various factors (e.g., process factors, internal or external impacts, or noise).

In the disclosure, 'wireless communication system' means a system for providing various communication services, such as voice and data packets, using a radio resource and may include a UE, a base station, or a core network.

The present embodiments disclosed below may be applied to wireless communication systems using various radio access technologies. For example, the present embodiments may be applied to various radio access technologies, such as code division multiple access (CDMA), frequency division multiple access (FDMA), time division multiple access (TDMA), orthogonal frequency division multiple access (OFDMA), single carrier frequency division multiple access (SC-FDMA), or non-orthogonal multiple access (NOMA). Further, radio access technology may mean not only a specific access technology, but also a communication technology for each generation established by various communication organizations, such as 3GPP, 3GPP2, Wi-Fi, Bluetooth, IEEE, and ITU. For example, CDMA may be implemented as radio technology, such as universal terrestrial radio access (UTRA) or CDMA2000. TDMA may be implemented as GSM (global system for mobile communications)/GPRS (general packet radio service)/EDGE (enhanced data rates for GSM evolution). OFDMA may be implemented with a wireless technology, such as institute of electrical and electronic engineers (IEEE) 802.11 (Wi-Fi), IEEE 802.16 (WiMAX), IEEE 802-20, evolved UTRA (E-UTRA), and the like. IEEE 802.16m is an evolution of IEEE 802.16e, and provides backward compatibility with IEEE 802.16e-based systems. UTRA is part of UMTS (universal mobile telecommunications system). 3GPP (3rd generation partnership project) LTE(long term evolution) is part of E-UMTS (evolved UMTS) using evolved-UMTS terrestrial radio access (E-UTRA) and adopts OFDMA for downlink and SC-FDMA for uplink. As such, the present embodiments may be applied to currently disclosed or commercialized radio access technologies and may also be applied to radio access technologies currently under development or to be developed in the future.

Meanwhile, in the disclosure, 'UE' is a comprehensive concept meaning a device including a wireless communication module that communicates with a base station in a wireless communication system and should be interpreted as a concept that may include not only user equipment (UE) in, e.g., WCDMA, LTE, NR, HSPA, and IMT-2020 (5G or new radio), but also a mobile station (MS), user terminal (UT), subscriber station (SS), or wireless device in GSM. Further, the UE may be a user portable device, such as a smartphone, according to the usage type and, in the V2X communication system, the UE may mean a vehicle or a device including a wireless communication module in the vehicle. Further, in the case of a machine type communication system, the UE may mean an MTC terminal, M2M terminal, or URLLC terminal equipped with a communication module to perform machine type communication.

In the disclosure, 'base station' or 'cell' refers to a terminal that communicates with a UE in terms of a network and in concept encompasses various coverage areas, such as node-B, evolved node-B (eNB), gNode-B (gNB), low power node (LPN), sector, site, various types of antennas, base transceiver system (BTS), access point, point (e.g. transmission point, reception point, or transmission/reception point), relay node, mega cell, macro cell, micro cell, pico cell, femto cell, remote radio head (RRH), radio unit (RU), or small cell. Further, 'cell' may mean one including a bandwidth part (BWP) in the frequency domain. For example, 'serving cell' may mean the activation BWP of the UE.

Since there is a base station controlling one or more cells in the various cells enumerated above, the base station may be interpreted in two meanings. The base station may be 1) a device itself which provides a mega cell, a macro cell, a micro cell, a pico cell, a femto cell, or a small cell in relation to the radio region, or 2) the radio region itself. In 1), all devices that provide a predetermined radio region and are controlled by the same entity or interact to configure a radio region via collaboration are denoted as base stations. An embodiment of the base station is a transmission/reception point, transmission point, or reception point depending on the scheme of configuring the radio region. In 2), the radio region itself, in which a signal is received or transmitted from the point of view of the UE or a neighboring base station may be the base station.

In the disclosure, 'cell' may mean the coverage of the signal transmitted from the transmission/reception point, a component carrier having the coverage of the signal transmitted from the transmission/reception point (transmission point or transmission/reception point), or the transmission/reception point itself.

Uplink (UL) means a scheme for transmitting/receiving data to and from the base station by the UE, and downlink (DL) means a scheme for transmitting/receiving data to/from the UE by the base station. Downlink may mean communication or communication path from the multiple transmission/transmission points to the UE, and uplink may mean communication or communication path from the UE to the multiple transmission/reception points. In this case, in the downlink, the transmitter may be part of the multiple transmission/reception points, and the receiver may be part of the UE. Further, in the uplink, the transmitter may be part of the UE, and the receiver may be part of the multiple transmission/reception points.

Uplink and downlink transmit/receive control information through a control channel, such as physical downlink control channel (PDCCH) or physical uplink control channel (PUCCH) and configure a data channel, such as physical downlink shared channel (PDSCH) or physical uplink shared channel (PUSCH), to transmit/receive data. Hereinafter, a context in which signals are transmitted/received through a channel, such as PUCCH, PUSCH, PDCCH, and PDSCH, is also referred to as 'transmits/receives PUCCH, PUSCH, PDCCH, and PDSCH.'

Although the technical spirit is described focusing primarily on the 3GPP LTE/LTE-A/new RAT (NR) communication system for clarity of description, the technical features are not limited to such communication system.

The 3GPP develops 5th-generation (5G) communication technology to meet the requirements of ITU-R's next-generation radio access technology after research on 4th-generation (4G) communication technology. Specifically, the 3GPP develops new NR communication technology separate from LTE-A pro and 4G communication technology, which have enhanced LTE-advanced technology to meet the requirements of ITU-R, as 5G communication technology. Both LTE-A pro and NR refer to 5G communication technologies. Hereinafter, 5G communication technology is described focusing on NR unless specified as a specific communication technology.

Operating scenarios in NR define various operating scenarios by adding considerations of satellites, automobiles, and new verticals in the existing 4G LTE scenarios and, from a service point of view, supports the enhanced mobile broadband (eMBB) scenario, the massive machine communication (mMTC) scenario that has high UE density but is deployed in a wide range to requires a low data rate and asynchronous access, and the ultra-reliability and low latency (URLLC) scenario that requires high responsiveness and reliability and may support high-speed mobility.

To meet such scenarios, NR discloses wireless communication systems that adopt a new waveform and frame structure technology, low-latency technology, ultra-high frequency band (mmWave) supporting technology, and forward compatibility providing technology. In particular, the NR system suggests various technical changes in terms of flexibility to provide forward compatibility. The main technical features of NR are described below with reference to the drawings.

### <Overview of NR system>

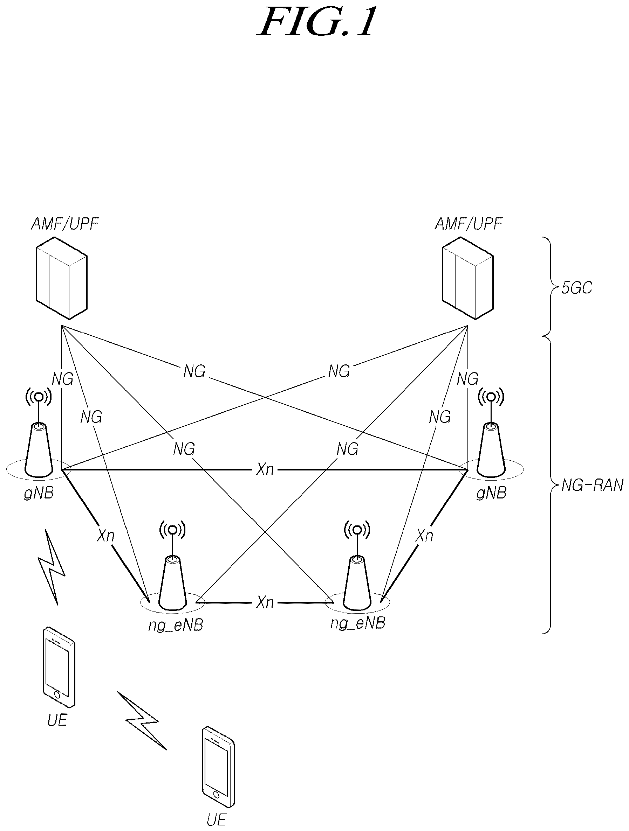

FIG. 1 is a view schematically illustrating a structure for an NR system to which the present embodiments may apply.

Referring to FIG. 1, the NR system is divided into a 5G core network (5GC) and an NR-RAN part. The NG-RAN is constituted of gNB and ng-eNBs providing user plane (SDAP/PDCP/RLC/MAC/PHY) and user equipment (UE) control plane (RRC) protocol termination. The gNBs or the gNBs and the ng-eNBs are interconnected through the Xn interface. The gNB and the ng-eNB are connected to the 5GC through the NG interface. The 5GC may include an access and mobility management function (AMF) which is in charge of the control plane, such as UE access and mobility control function, and a user plane function (UPF) which is in charge of the user data control function. NR supports both the below-6GHz frequency band (Frequency Range 1 (FR1) and above-6GHz frequency band (Frequency Range 2 (FR2)).

The gNB means a base station that provides the UE with NR user plane and control plane protocol termination, and the ng-eNB means a base station that provides the UE with the E-UTRA user plane and control plane protocol termination. In the disclosure, the base station should be understood as encompassing gNB and ng-eNB and, as necessary, be used to separately denote gNB or ng-eNB.

### <NR waveform, numerology, and frame structure>

NR uses the CP-OFDM waveform using the cyclic prefix for downlink transmission and CP-OFDM or DFT-s-OFDM for uplink transmission. OFDM technology is easily combined with multiple input multiple output (MIMO) and has the advantages of high frequency efficiency and capability of using a low-complexity receiver.

Meanwhile, since, in NR, the above-described three scenarios have different requirements for data rate, latency, and coverage, it is needed to efficiently meet the requirements for each scenario through the frequency band constituting any NR system. To that end, there has been proposed technology for efficiently multiplexing radio resources based on a plurality of different numerologies.

Specifically, the NR transmission numerology is determined based on the subcarrier spacing and cyclic prefix (CP) and, as shown in Table 1 below, it is exponentially changed, with the exponent value of 2 used as µ with respect to 15kHz.

**[Table 1]**

| µ | subcarrier spacing | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

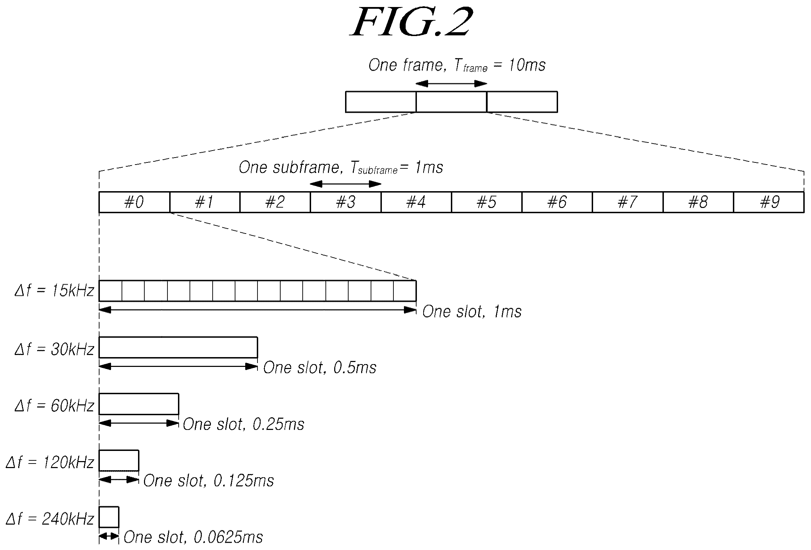

As shown in Table 1 above, the NR numerologies may be divided into five types depending on the subcarrier spacing. This differs from the subcarrier spacing fixed to 15kHz in LTE which is one 4G communication technology. Specifically, in NR, the subcarrier spacings used for data transmission are 15, 30, 60, and 120 kHz, and the subcarrier spacings used for synchronization signal transmission are 15, 30, 12, and 240 kHz. Further, the extended CP is applied only to the 60kHz subcarrier spacing. Meanwhile, as the frame structure in NR, a frame having a length of 10ms, which is constituted of 10 subframes having the same length of 1ms, is defined. One frame may be divided into half frames of 5 ms, and each half frame may include 5 subframes. In the case of the 15kHz subcarrier spacing, one subframe is constituted of one slot, and each slot is constituted of 14 OFDM symbols. FIG. 2 is a view illustrating a frame structure in an NR system to which the present embodiments may apply. Referring to FIG. 2, a slot is fixedly composed of 14 OFDM symbols in the case of the normal CP, but the length of the slot in the time domain may vary depending on the subcarrier spacing. For example, in the case of a numerology having a 15kHz subcarrier spacing, a slot has the same length as the subframe, as the length of 1ms. In contrast, in the case of a numerology having a 30 kHz subcarrier spacing, a slot is constituted of 14 OFDM symbols, but two slots may be included in one subframe, as the length of 0.5ms. In other words, the subframe and the frame are defined as having a fixed length, and the slot is defined with the number of symbols, and the temporal length may vary depending on the subcarrier spacing.

Meanwhile, NR defined a slot as the basic unit for scheduling and, to reduce transmission latency in the radio section, adopted minislot (or subslot or non-slot based schedule). If a wide subcarrier spacing is used, the length of one slot is inverse-proportionally shortened, so that it is possible to reduce transmission latency in the radio section. The minislot is for efficient support of the URLLC scenario and enables scheduling in the units of 2, 4, or 7 symbols.

Further, NR defined uplink and downlink resource allocation as the symbol level in one slot, unlike LTE. To reduce HARQ latency, a slot structure has been defined which enables HARQ ACK/NACK to be transmitted directly in the transmission slot, and such slot structure is referred to as a self-contained structure in the description.

NR has been designed to be able to support a total of 256 slots and, among them, 62 slot formats are used in 3GPP Rel-15. Further, a common frame structure constituting the FDD or TDD frame is supported through a combination of various slots. For example, a slot structure in which the symbols of the slot all are configured as downlink, a slot structure in which all the symbols are configured as uplink, and a slot structure in which downlink symbols and uplink symbols are combined are supported. Further, NR supports data transmission that is distributed and scheduled in one or more slots. Therefore, the base station may inform the UE whether the slot is a downlink slot, uplink slot, or flexible slot using the slot format indicator (SFI). The base station may indicate the slot format by indicating the index of the table configured through UE-specific RRC signaling, by the SFI and may indicate it dynamically through downlink control information (DCI) or statically or semi-statically through RRC.

### <NR physical resource>

In connection with the physical resource in NR, antenna port, resource grid, resource element, resource block, and bandwidth part are taken into consideration.

An antenna port is defined so that the channel carried by a symbol on an antenna port may be inferred from the channel carried by another symbol on the same antenna port. Where the large-scale property of the channel carrying a symbol on one antenna port may be inferred from the channel carrying a symbol on a different antenna port, the two antenna ports may be said to have a QC/QCL (quasi co-located or quasi co-location) relationship. Here, the large-scale properties include one or more of delay spread, Doppler spread, frequency shift, average received power, and received timing.

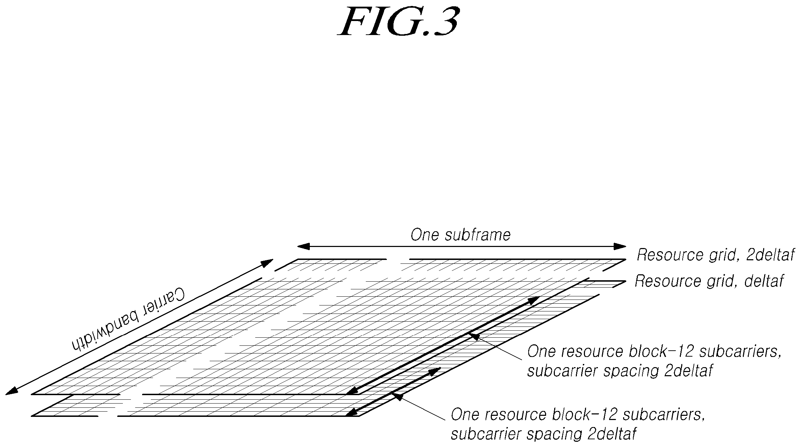

FIG. 3 is a view illustrating a resource grid supported by radio access technology to which the present embodiments may apply.

Referring to FIG. 3, since NR supports a plurality of numerologies in the same carrier, a resource grid may exist depending on each numerology. Further, the resource grid may exist depending on the antenna port, subcarrier spacing, or transmission direction.

The resource block is constituted of12 subcarriers and is defined only in the frequency domain. Further, the resource element is constituted of one OFDM symbol and one subcarrier. Therefore, as shown in FIG. 3, the size of one resource block may vary depending on the subcarrier spacing. Further, in NR, "point A", which serves as a common reference point for the resource block grid, and common resource block and virtual resource block are defined.

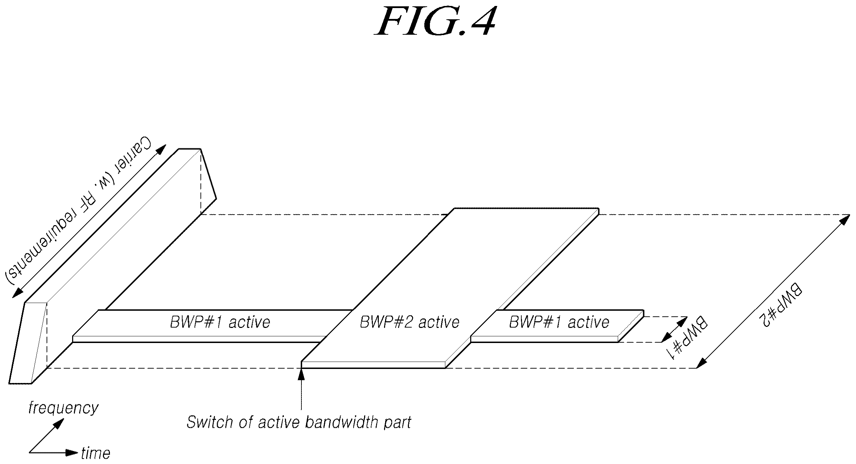

FIG. 4 is a view illustrating a bandwidth part supported by radio access technology to which the present embodiments may apply.

In NR, unlike LTE where the carrier bandwidth is fixed to 20Mhz, the maximum carrier bandwidth from 50Mhz to 400Mhz is set for each subcarrier spacing. Therefore, it is not assumed that all UEs use all of these carrier bandwidths. Accordingly, in NR, as shown in FIG. 4, a bandwidth part (BWP) may be designated within the carrier bandwidth and used by the UE. Further, the bandwidth part is associated with one numerology and is composed of a subset of contiguous common resource blocks and may be activated dynamically over time. Up to four bandwidth parts may be configured in the UE for each of uplink and downlink. Data is transmitted/received using the bandwidth part activated at a given time.

In the case of paired spectra, the uplink and downlink bandwidth parts are set independently, and in the case of unpaired spectra, the bandwidth parts of uplink and downlink are set to make a pair to share the center frequency so as to prevent unnecessary frequency re-tunning between downlink and uplink operations.

### <NR initial access>

In NR, the UE performs a cell search and random access procedure to access the base station and perform communication.

Cell search is a procedure in which the UE is synchronized with the cell of the base station using the synchronization signal block (SSB) transmitted from the base station, obtains the physical layer cell ID, and obtains system information.

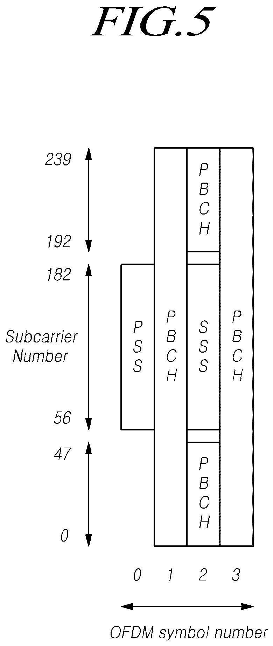

FIG. 5 is a view exemplarily illustrating a synchronization signal block in radio access technology to which the present embodiments may apply.

Referring to FIG. 5, the SSB is constituted of a primary synchronization signal (PSS) and a secondary synchronization signal (SSS) occupying 1 symbol and 127 subcarriers, respectively, and a PBCH spanning 3 OFDM symbols and 240 subcarriers.

The UE monitors the SSB in time and frequency domains and receives the SSB.

The SSB may be transmitted up to 64 times in 5 ms. Multiple SSBs are transmitted on different transmission beams within 5 ms time, and the UE performs detection assuming that SSBs are transmitted every 20ms period based on one specific beam used for transmission. The number of beams available for SSB transmission within 5ms may increase as the frequency band increases. For example, up to 4 SSB beams may be transmitted below 3 GHz, SSBs may be transmitted using up to 8 different beams in a frequency band of 3 to 6 GHz, and up to 64 different beams in a frequency band of 6 GHz or higher.

Two SSBs are included in one slot, and the start symbol and number of repetitions within the slot are determined according to the subcarrier spacing as follows.

Meanwhile, the SSB is not transmitted at the center frequency of the carrier bandwidth unlike the SS of conventional LTE. In other words, the SSB may be transmitted even in a place other than the center of the system band and, in the case of supporting wideband operation, a plurality of SSBs may be transmitted in the frequency domain. Accordingly, the UE monitors the SSB by a synchronization raster, which is a candidate frequency location for monitoring the SSB. The carrier raster and synchronization raster, which are the center frequency location information about the channel for initial access, are newly defined in NR, and the synchronization raster has a wider frequency interval than the carrier raster, enabling the UE to do a fast SSB search.

The UE may obtain the MIB through the PBCH of the SSB. The master information block (MIB) includes minimum information for the UE to receive remaining system information (remaining minimum system information (RMSI) broadcast by the network. Further, the PBCH may include information about the position of the first DM-RS symbol in the time domain, information for monitoring SIB1 by the UE (e.g., SIB1 numerology information, information related to SIB1 CORESET, search space information, PDCCH-related parameter information, etc.), offset information between the common resource block and the SSB (the absolute location of the SSB within the carrier is transmitted through SIB1), and the like. Here, the SIB1 numerology information is equally applied to some messages used in the random access procedure for the UE to access the base station after completing the cell search procedure. For example, the numerology information about SIB 1 may be applied to at least one of messages 1 to 4 for the random access procedure.

The above-described RMSI may mean system information block 1 (SIB1). SIB1 is broadcast periodically (e.g., 160 ms) in the cell. SIB1 includes information necessary for the UE to perform an initial random access procedure, and is periodically transmitted through the PDSCH. To receive SIB1, the UE needs to receive numerology information used for SIB1 transmission and control resource set (CORESET) information used for SIB1 scheduling through the PBCH. The UE identifies scheduling information for SIB1 using SI-RNTI in CORESET and obtains SIB1 on PDSCH according to scheduling information. The remaining SIBs except for SIB1 may be transmitted periodically and may be transmitted at the request of the UE.

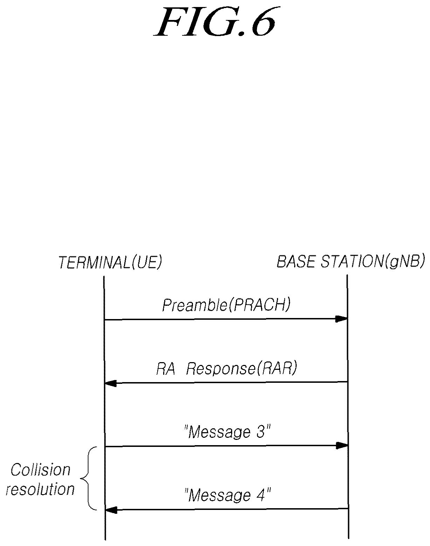

FIG. 6 is a view illustrating a random access procedure in radio access technology to which the present embodiments may apply.

Referring to FIG. 6, if the cell search is completed, the UE transmits a random access preamble for random access to the base station. The random access preamble is transmitted through PRACH. Specifically, the random access preamble is transmitted to the base station through the PRACH composed of contiguous radio resources in a periodically repeated specific slot. In general, when the UE initially accesses the cell, a contention-based random access procedure is performed, and when random access is performed for beam failure recovery (BFR), a non-contention-based random access procedure is performed.

The UE receives a random access response to the transmitted random access preamble. The random access response may include a random access preamble identifier (ID), uplink radio resource (UL grant), temporary cell-radio network temporary identifier (C-RNTI), and time alignment command (TAC). Since one random access response may include random access response information for one or more UEs, the random access preamble identifier may be included to indicate to which UE the included UL grant, temporary C-RNTI, and TAC are valid. The random access preamble identifier may be an identifier for the random access preamble received by the base station. The TAC may be included as information for the UE to adjust uplink synchronization. The random access response may be indicated by the random access identifier on the PDCCH, that is, the random access-radio network temporary identifier (RA-RNTI).

Upon receiving a valid random access response, the UE processes information included in the random access response and performs scheduled transmissions to the base station. For example, the UE applies the TAC and stores the temporary C-RNTI. Further, the UE transmits data stored in the buffer of the UE or newly generated data to the base station using the UL grant. In this case, information that may identify the UE should be included.

Finally, the UE receives a downlink message for contention resolution.

### <NR CORESET>

In NR, the downlink control channel is transmitted in a control resource set (CORESET) having a length of 1 to 3 symbols and transmits uplink/downlink scheduling information, slot format index (SFI), transmit power control (TPC) information, etc.

As such, NR introduced the concept of CORESET to secure the flexibility of the system. The control resource set (CORESET) means a time-frequency resource for a downlink control signal. The UE may use one or more search spaces in CORESET time-frequency resources to decode control channel candidates. A quasi co-location (QCL) assumption for each CORESET has been set, which is used for the purpose of indicating the characteristics of the analog beam direction in addition to the latency spread, Doppler spread, Doppler shift, and average latency, which are characteristics assumed by the conventional QCL.

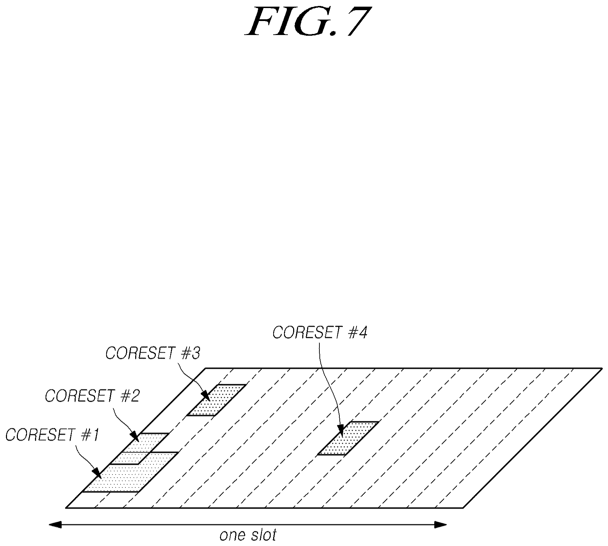

FIG. 7 is a view illustrating a CORESET.

Referring to FIG. 7, the CORESET may exist in various forms within a carrier bandwidth within one slot. In the time domain, the CORESET may be constituted of up to 3 OFDM symbols. Further, the CORESET is defined as a multiple of 6 resource blocks up to the carrier bandwidth in the frequency domain.

The first CORESET is indicated through the MIB as part of the initial bandwidth part configuration to allow additional configuration and system information to be received from the network. After connection setup with the base station, the UE may receive and configure one or more CORESET information through RRC signaling.

As used herein, the frequency, frame, subframe, resource, resource block, region, band, subband, control channel, data channel, synchronization signal, various reference signals, various signals, and various messages related to new radio (NR) may be interpreted in various meanings as currently used or to be used in the future.

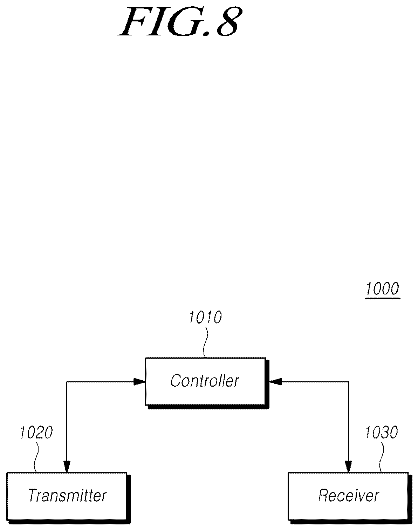

FIG. 8 is a view illustrating a configuration of a base station 1000 according to another embodiment.

Referring to FIG. 8, a base station 1000 according to another embodiment, includes a controller 1010, a transmitter 1020, and a receiver 1030.

The controller 1010 controls the overall operation of the base station 1000 in a wireless communication network as required to perform the present disclosure described below.

The transmitter 1020 and the receiver 1030 are used to transmit or receive signals or messages or data necessary for performing the present disclosure described below, with the UE.

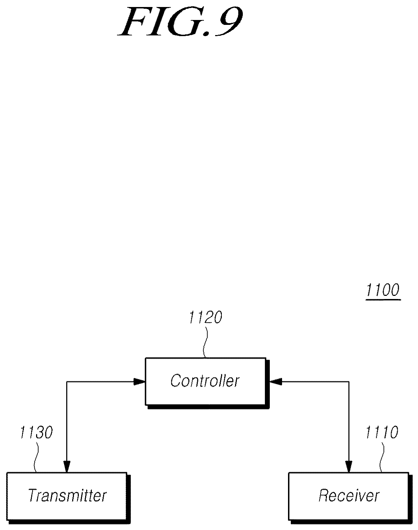

FIG. 9 is a view illustrating a configuration of a UE 1100 according to another embodiment.

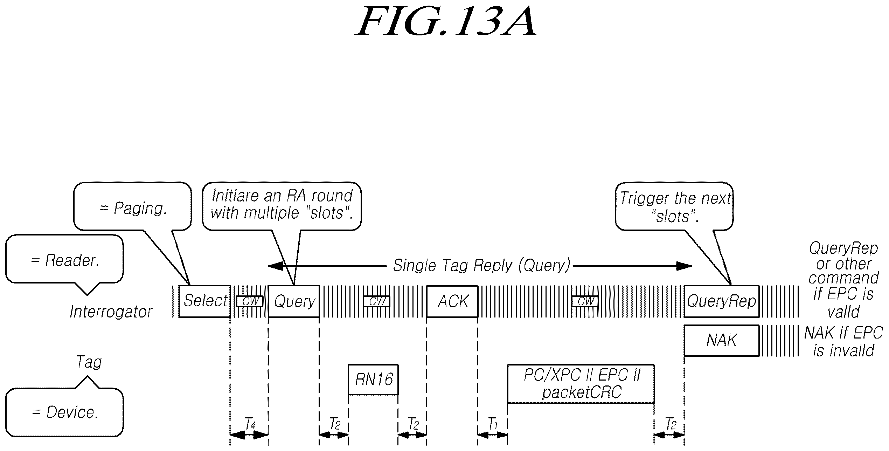

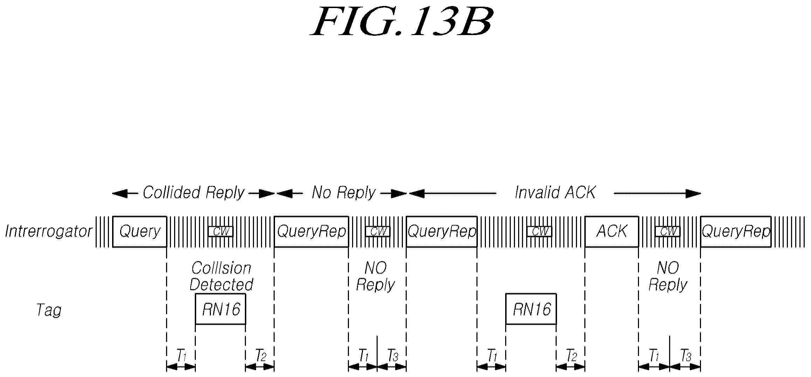

Referring to FIG. 13, according to another embodiment, a UE 1100 includes a receiver 1110, a controller 1120, and a transmitter 1130.

The receiver 1110 receives downlink control information and data or messages from the base station via a corresponding channel.

The controller 1120 controls the overall operation of the UE 1100 in a wireless communication network as required to perform the present disclosure described below. The transmitter 1120 transmits uplink control information and data or messages to the base station via a corresponding channel.

The base station 1000 described with reference to FIG. 8 and the UE 1100 described with reference to FIG. 9 perform the operations described below, and also perform methods for performing these operations.

### Ambient IoT (Ambient IoT)

The Ambient IoT is a technology similar to RFID, but its communication method differs significantly from the existing 3GPP standard.

Two key technological features of the Ambient IoT are energy harvesting, which operates without batteries or relies on power from radio waves, light, vibration, heat, or other suitable sources. Backscattering, on the other hand, modulates the absorption rate of a CW (Continuous Wave) signal received by the device's antenna, thereby varying the strength of the reflected signal and transmitting data. This technology, which efficiently transmits signals by reflecting them from a reader rather than directly generating and transmitting RF signals, is attracting attention in the communications field.

The basic process of Ambient IoT communication is as follows:
1. Power Supply via Energy Harvesting: When an Ambient IoT device is located within the range of a base station acting as a reader, it prepares to receive downlink control information using the base station's radio signals as its power source.
2. Transmission of Downlink Control Information: The base station transmits commands to individual devices or groups of devices using messages similar to paging.
   Device groups can include operators, manufacturers, tag types, etc., and commands can be configured to allow responses from each group. At this time, information regarding the maximum time slot used to determine transmission timing for each device is also transmitted.
3. Provision of Continuous Wave (CW) Signals: To support backscattering, a key feature of the ambient IoT, a Continuous Wave (CW) signal must be provided to the devices.
   This signal can be transmitted directly from the base station or through a separate emitter.
4. Transmission of Device IDs via Backscattered Signals: Devices that receive downlink control information randomly select a time slot to transmit their device IDs. If multiple devices attempt to connect in the same time slot, only one device is allowed to connect. If a device fails, it waits until the next time slot or until downlink control information is available before retrying. The ambient IoT fundamentally borrows from RFID's wireless technology, but its mobile communications-based nature presents many differences from RFID. 3GPP is the first to support devices that don't support UICC, and this requires consideration of numerous aspects, from wireless protocols to management and authentication.

### Device Management Technology

Ambient IoT devices are typically attached to multiple devices, such as material management devices, resulting in a large number of devices communicating with a single base station.

To ensure efficient communication even in environments with numerous devices, two key considerations are necessary. The first is a group-based paging method. The ID of the ambient IoT device is expected to consist of several fields, including the operator number, manufacturer number, and unique identifier. When the base station attempts to communicate with the ambient IoT device, rather than targeting all devices, it sets conditions based on matching values in specific fields of the device ID, allowing communication only to the required devices. The second method involves aggregating multiple device IDs when transmitting device IDs received from the base station to the core. Conditions for transmitting device IDs include the arrival of all IDs from a specific group, the passage of a predetermined time, or the collection of a certain amount of data.

### Wireless Signal Interference Control Technology

The Ambient IoT devices may struggle to communicate normally when receiving downlink command signals from multiple base stations. This is because time slots lack cell ID information, making it impossible for devices to distinguish which base station the command is from.

Two approaches can be considered to address this issue. The first is to apply TDM, which operates sequentially in areas where base station downlink command coverage is expected to overlap, so that only one base station operates at a time. This ensures that only one command is received by each ambient IoT device.

The second approach is to adjust the transmit power of the base station's downlink signal in the same situation. At the OAM level, power can be controlled to prevent overlap in coverage between base stations, taking into account base station locations and usage scenarios. This requires comprehensive optimization, ensuring coverage gaps are minimized across the entire target area and only adjusting the power of specific PRBs to avoid impacting other services.

### Positioning Technology

The ambient IoT considers device positioning. While this varies depending on the scenario, the 3GPP standard requires an accuracy of approximately several meters.

3GPP positioning can be broadly categorized into base station cell ID and triangulation. While cell ID is easy to implement, it lacks high accuracy. Triangulation utilizes the signal strength or time delay measurements of a device's exchange with three or more base stations, resulting in much more accurate location. However, the ultra-low-cost and lightweight device architecture of the ambient IoT makes signal strength or time delay measurements infeasible, making triangulation difficult to apply in the ambient IoT.

To address this, evolution toward positioning methods that minimize device involvement is necessary. The base station performs the role of a conventional device, such as measuring latency. This data is then collected and computed by the positioning server, allowing the device's location to be estimated.

However, since the device is not involved, data accuracy can be reduced. To improve accuracy, the server combines the results of multiple positioning attempts, rather than a single attempt. Multiple measurements can be performed multiple times at the same base station, or the results can be combined by performing measurements at both the base station and intermediate nodes.

### Technologies for Improving Spectral Efficiency

In the ambient IoT, support for multiple access methods and new frequency bands is necessary to improve spectral efficiency.

The ambient IoT primarily considers TDMA as a multiple access method. This method adjusts communication times based on the number of devices, allowing for a large number of devices. However, this approach has limitations. As an alternative, as described below, the introduction of FDMA allows for simultaneous communication with multiple devices, allowing for more devices. Furthermore, FDMA can improve coverage by increasing the power density of the transmitted signal while reducing bandwidth usage. The ambient IoT devices, due to their low cost and complexity, suffer from low timing accuracy, limiting the frequency bands they can support. The ambient IoT currently supports only HD-FDD, which allows operation even with timing errors. TDD requires a low timing error and fast switching between downlink and uplink, as downlink and uplink are used separately based on time. However, current ambient IoT devices struggle to support this. However, TDD has been the primary method for efficient frequency utilization since 5G, and this trend is expected to increase in 6G. Therefore, 6G will require support for a variety of frequency bands, including TDD, to overcome implementation limitations.

### Mobility Support Technology

In tracking scenarios, mobility support for the ambient IoT devices is essential in addition to positioning. Existing mobile communications systems allow location tracking at the tracking area level when a device is idle, and at the cell level when connected. However, the ambient IoT devices without UICCs do not register their locations, so tracking areas are not considered, making it difficult for servers to detect changes in their locations, as is the case with existing mobile communications. Mobility tracking of the ambient IoT devices must be performed manually on the server. Considering that a single ambient IoT server can manage at least tens of thousands of devices, this places a significant burden on the server.

Current standards include the concept of an inventory area. However, this is intended to identify specific areas where inventory operations are performed and is not intended for mobility support. While the mobility support is not expected to be essential indoors, it will likely be necessary outdoors for scenarios such as tracking. This requires implementing a feature that updates location information by allowing devices to respond to messages, such as paging, transmitted from the base station with their device ID. Messages such as paging for the ambient IoT are not device-specific because they are for inventory operations, but service scenarios requiring continuous tracking can be implemented by periodically responding to messages when the session timer performing inventory on the device expires, or conditionally responding when the inventory area changes.

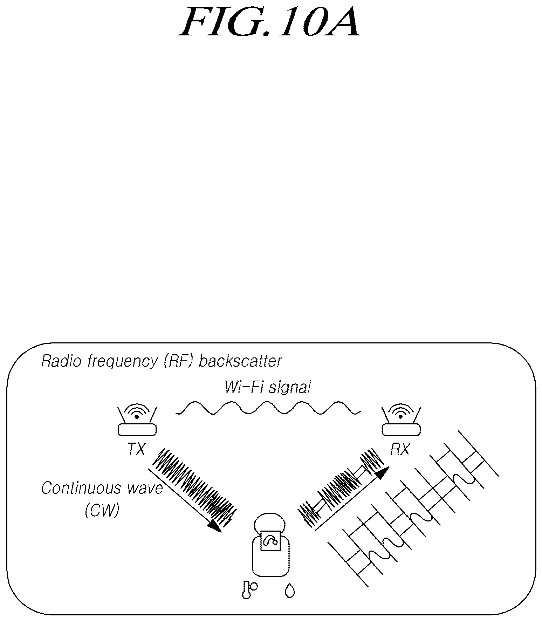

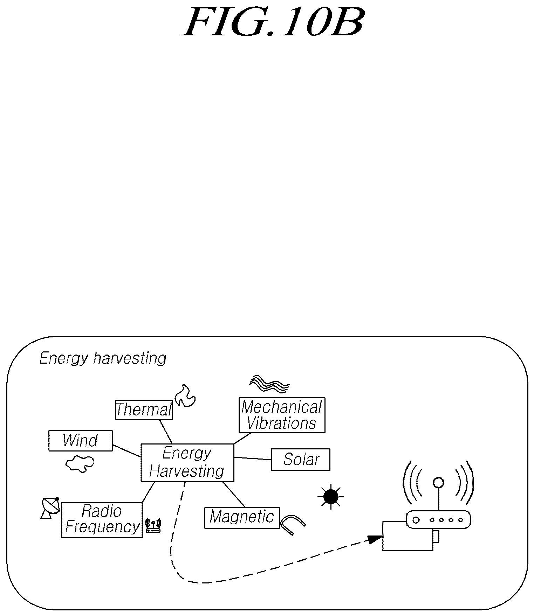

FIGs. 10A and 10B illustrate two energy utilization methods.

As illustrated in FIGs. 10A and 10B, the two energy utilization methods are RF backscatter and energy harvesting. Among the three types of devices, Device Type 1 does not store energy and does not independently generate or amplify a signal. For example, it performs backscatter transmission. Device Type 2 stores energy and does not independently generate or amplify a signal. For example, it performs backscatter transmission. The use of stored energy in Device Type 2 involves amplifying reflected signals. Device Type 3 stores energy and does not independently generate or amplify a signal. For example, it uses active RF components for transmission. Hereinafter, the terms "terminal" and "device" are used interchangeably as entities corresponding to the reader, but they may actually be the same entity.

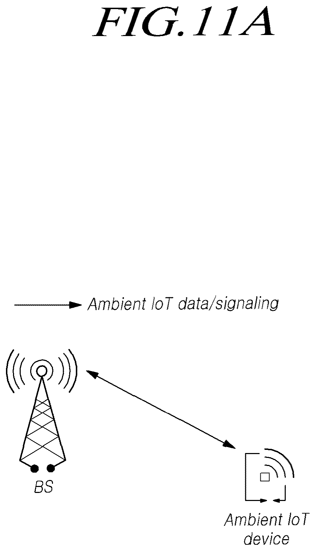

FIGs. 11A through 11D illustrate connectivity topologies between a base station and a device.

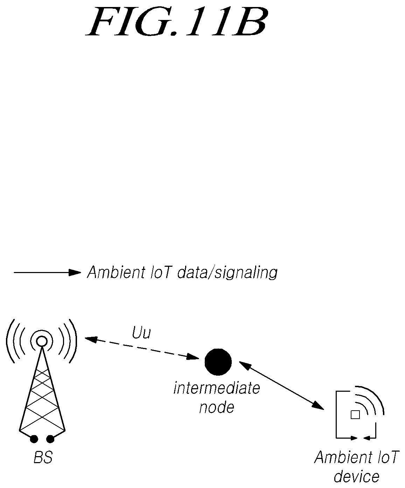

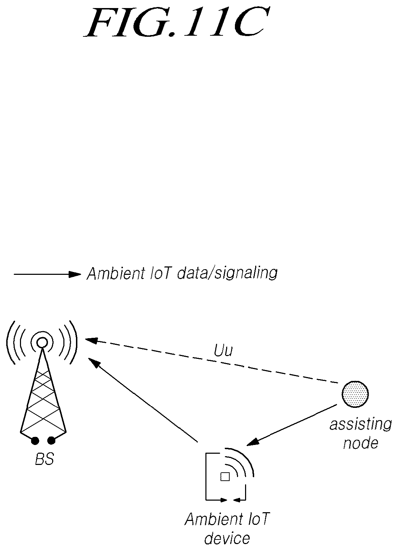

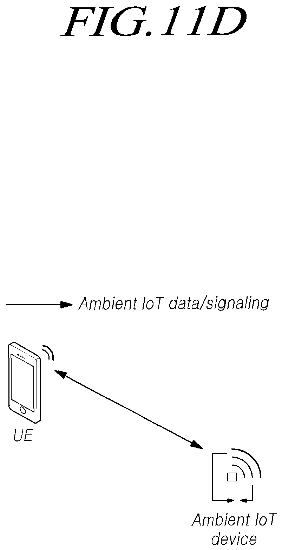

Topology 1, illustrated in FIG 11A, includes a base station (BS) and an ambient IoT device. Topology 2, illustrated in FIG 11B, includes an intermediate node between the BS and the device, and topology 3, illustrated in FIG 11C, includes a downlink assistance or assisting node. Topology 4, illustrated in Figure 11D, includes a device and an ambient IoT device. In FIGs. 11A through 11D, arrows indicate the direction of ambient data/signaling.

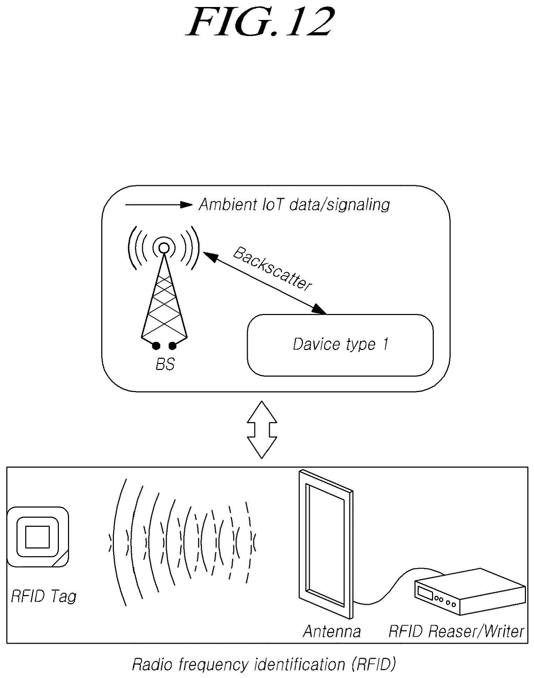

FIG. 12 illustrates the relationship between the Type 1 device of FIG. 10 and Topology 1 of FIG. 11A.

In FIG. 12, RFID is a technology that automatically identifies and reads information from objects with electronic tags using radio waves. An antenna is placed on the RFID reader/writer, and this antenna wirelessly communicates with the RFID tag.

In FDD, the FR1 licensed spectrum provides reader-to-device (R2D) communication in the downlink (DL) spectrum, and device-to-reader (CW) and device-to-reader (D2R) communication in the uplink spectrum. Supported multiple access is only Time Division Multiple Access (TDMA) in R2D, and can be TDMA and Frequency Division Multiple Access (FDMA) in D2R. Its ultra-lightweight design uses only two channels: the Physical R2D channel (PRDCH) and the Physical D2R channel (PDRCH). The redundancies removed are the RRC layer, periodic system information (PSI), and MIB in the control plane, and SDAP, PDCP, the RLC layer, SR/BSR, HARQ, and RLC AM in the user plane.

Its primary function is to identify and acquire the identity and location information of all devices in the environment, enabling sensing, management, and control. The process begins with paging in Step A, and then transmits the ID with or without random access in Step B.

Random access (RA) is initiated and scheduled by the reader when it lacks knowledge of the number and identity of devices within its communication range. At this time, devices contend for the channel and report their identity information. In the 3-step RA, Step 1 is when the device transmits a 16-bit random ID as message 1 (Msg1). Step 2 is when the reader echoes the received random ID if it is valid Step 3 is when the device transmits its unique ID.

### 3-step RA

Step 1 [Device]: Device sends a 16-bit random ID as Msg1.
Step 2 [Reader]: If the received random ID is valid, the reader echoes back the random ID..
Step 3 [Device]: Device then transmits its unique ID

The 3-step RA will be described in more detail later.

FIGs. 13A and 13B illustrate similar random access procedures in an RFID system. In the ambient IoT network described below, the random access procedure can be applied in substantially the same manner as, or with modifications to, the random access procedure in the RFID system described with reference to FIGs. 13A and 13B.

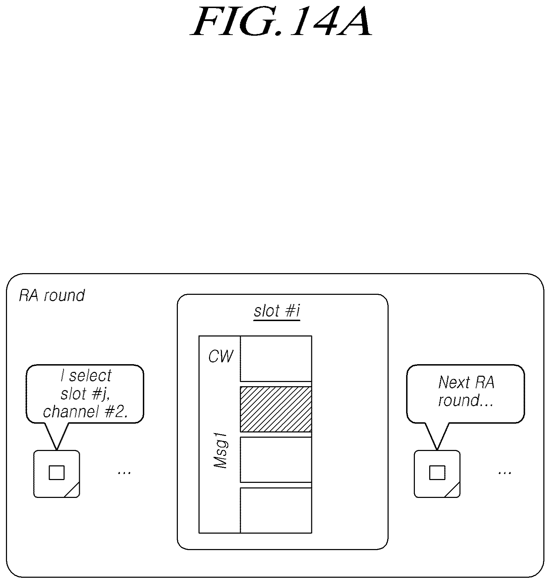

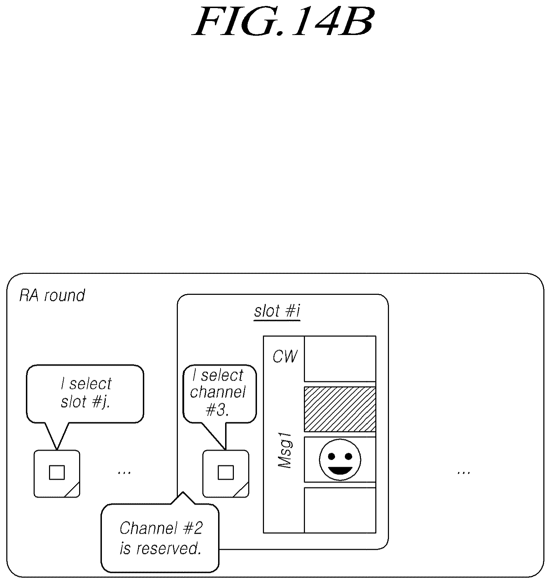

In reader scheduling and device selection of Msgl resources, as illustrated in FIG 14A, as a first option, the device can randomly select one access occasion (one time-frequency resource) from the total number of access occasions indicated by the reader. As illustrated in FIG 14B, as a second option, the device can first randomly select one set of access occasions and then randomly select one access occasion within the selected set of access occasions.

Specifically, assume that the reader initiates an RA round with slots where each slot contains available frequency channels.

Option 1: Upon receiving an RA round trigger, the device must first determine a time slot and channel.

Option 2: Upon receiving an RA round trigger, the device first determines a time slot and then selects an available channel based on the scheduling of the "slot trigger."

As an advantage, channel selection can be performed dynamically if the system supports channels reserved for specific services.

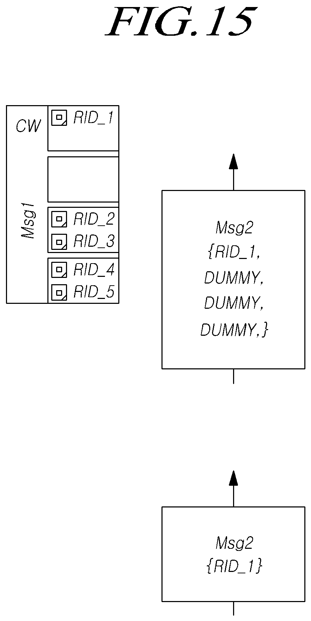

As shown in FIG 15, regarding the structure of Message 2 (Msg 2), Message 2 echoes a list of RNs for STAs that have successfully accessed FDMA occasions within a TDMA occasion limited by the grant size.

(Option 1) Static: For each FMDA occasion for transmitting Msgl as shown in the upper right of FIG 15: With valid Msg1, the corresponding random ID is sent. With invalid Msg1, a dummy random ID not transmitted by any device is sent.

(Option 2) Dynamic: Only the scheduling information for those valid random IDs is transmitted as shown in the lower right of FIG 15:
Considering that R2D transmission is TDMA-only, a long message 2 (Msg2) significantly increases transmission time.

With Option 1, devices must receive the long message 2 (Msg2).

### Ambient IoT Random Access

One of the most important services provided in an ambient IoT network is "inventory" (collecting the unique IDs of devices).

The inventory procedure needs "contention-based random access" if the reader have no information about the devices.

Contention-based random access means:
1. The reader does not know the total number of devices or the actual IDs of the devices.
2. The reader allocates some physical resources for the devices, and then the devices try to access these resources in a contention-based manner.
3. Except the bit error brought by the channel, the transmission could come from the "collision" where two or more devices select the same time-frequency resource and transmit their message on it.

3GPP decided that only 3-step contention-based RA (CBRA) would be supported for the ambient IoT, and that CBRA and contention-free RA (CFRA) would be standardized. Furthermore, it was decided that subsequent paging messages would be reused to trigger re-access, and that there would be no need to distinguish between the Message 1 (msg1) resources for initial access and re-access.

In the "3-step random access" used in the Ambient loT, the reader first transmits a "paging" or trigger-like message to wake up all or a group of devices and claim the physical resources.

In Step 1, each device generates a 16-bit random ID and sends this random ID as Msg1 to the reader on the selected resource.

In Step 2, if the device can decode the random ID as a valid ID, it then echo back or resends this random ID in Message 2 (Msg2).

In step 3, once a device finds its random ID in the message (Msg2), it then sends its unique ID in the dedicated resource.

As an example of an ambient IoT solution for NR, there may be used the FR1 licensed spectrum in FDD with R2D in the downlink spectrum and D2R and CW in the uplink spectrum. Multiplexing/multiple access in the R2D is only by TDMA, and in the D2R is only by TDMA and FDMA.

There may support FDMA with Y ≥ 1 D2R transmissions for Message 1 (Msg1) from multiple devices in response to an R2D transmission triggering random access.
- The maximum value of Y>1 is determined based on the feasible value of a small frequency shift to be decided.

There may support the following two options for Message 2 (Msg2) transmissions in response to multiple Message 1 (Msg1) transmissions, which are initiated by a R2D transmission triggering random access:
- Option 1: The PRDCH for Message 2 (Msg2) transmissions corresponds to Ambient IoT Message 1 (Msg1) received by one device.
- Option 2: The PRDCH for Message 2 (Msg2) transmissions corresponds to multiple Ambient IoT Message 1 (Msg1) transmissions received from different devices. The maximum number of Msgl responses that can be carried within a PRDCH for Msg2 must also be considered.

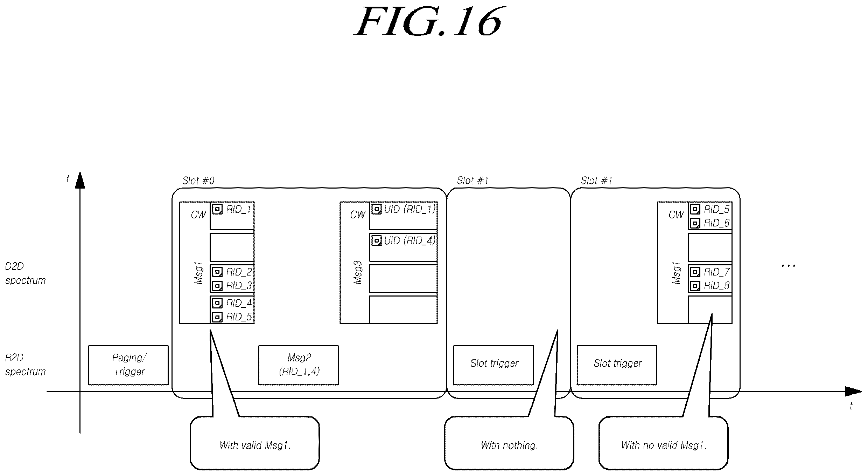

Based on the foregoing, the transmission may be as shown in FIG 16. Referring to FIG 16, in slot #0, RID_2 and RID_3 in message 1 (Msg1) use the same frequency band, resulting in a collision. Therefore, R2D can only include RID_1 and 4 in message 2 (Msg2). Message 3 (Msg3) can only use the frequency bands for RID_1 and RID_4, respectively. Similarly, a collision between all RIDs in slot #1 may result in no valid message 1 (Msg1).

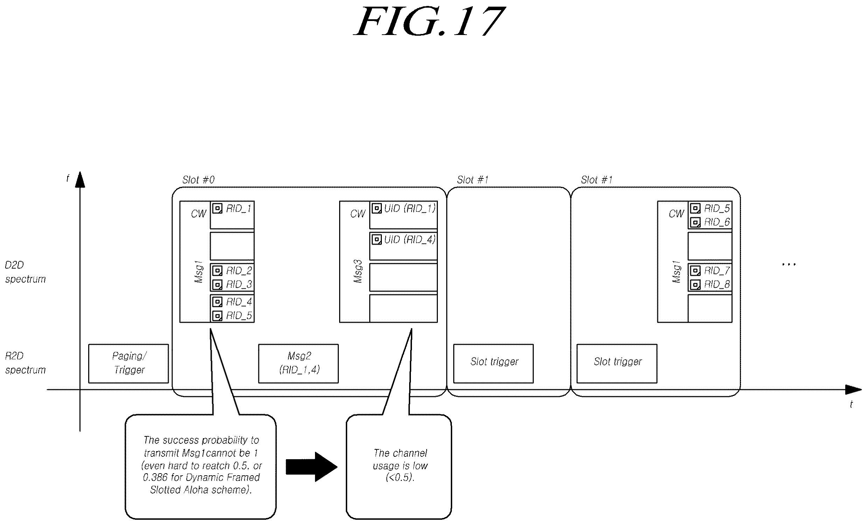

As illustrated in FIG 17, due to the low resource efficiency to transmit the Message 3 (Msg3), even if a valid Message 1 (Msg1) is received, the reader must still allocate a transmission occasion for the Message 3 (Msg3).

The success probability to transmit the Message 1 (Msg1) cannot be 1. The success probability to transmit the Message 1 (Msg1) is difficult to reach 0.5 or even 0.386 for Dynamic Frame Slotted Aloha(DFSA). In other words, the channel usage is low (< 0.5).

### First Embodiment

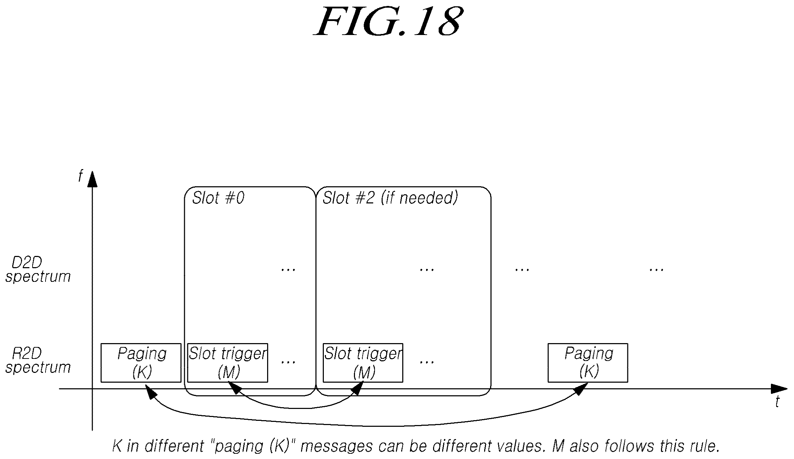

To solve this problem, with reference to FIG. 18, as one embodiment, multi-round random ID collection: frame level is proposed.

### [Definitions]

Frame": a time period triggered by "Paging (K)" with dynamic length, which consists of at least one slot (defined later), where the devices successfully transmitting Msgl can finish the random access in it and the devices involved in the Msgl collisions wait for the next frame.

### [Triggers]

"Paging (K)" (K ≥ 1) for: 1) claiming the start of a frame; 2) noticing a subset (or the whole set) of devices for random access; 3) claiming the number of Msgl occasions as K; and 4) interrupting the current frame if needed.

### [Movements]

1. The reader transmits "Paging (K)" in the R2D spectrum.
2. The device receives "Paging (K)" in the R2D spectrum, randomly selects a number among {1,...,K} and then records it in Msg1_Occasion_COUNTER. Each slot is triggered only by "slot trigger" that contains the resource allocation information. At this time, the value starts from 1.

In FIG 18, K in different "Paging (K)" messages can have different values. M also follows this rule. That is, M can also have different values.

### Second Embodiment

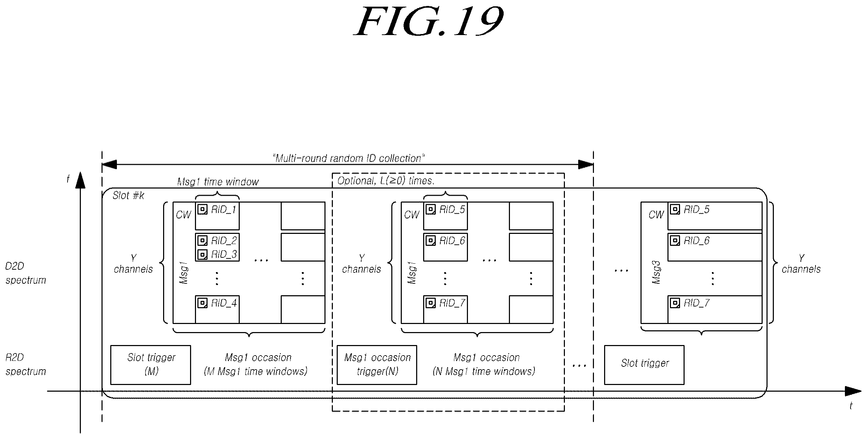

Referring to FIG. 19, as another embodiment, multi-round random ID collection: slot level is proposed.

### [Definitions]

"Message 1 occasion (Msg1 occasion)": A time period triggered by "Slot trigger (M)" or " Msgl occasion trigger (N)", which contains M (≥ 1) or N (≥ 1) of Msgl time windows, respectively each of which is enough for devices to transmit one Msg1.

"Message 3 occasion(Msg3 occasion)": A time period for devices to transmit only one Msg3 in each channel.

"Slot": "Slot": a time period triggered by "Slot trigger (M)" with dynamic length, which consists of one "Slot trigger (M)" transmission, at least one Msgl transmission occasions, one Msg2 transmission, and one Msg3 occasion. A slot can have L (≥ 0) more Msgl transmission occasions each of which is triggered by "Msg1 occasion trigger (N)". The reader can control L dynamically over different slots.

The "Msg1 buffer" at the reader: a list kept by the reader to record.

### [Triggers]

"Slot trigger (M)" (M ≥ 1) for: 1) claiming the start of the slot, 2) claiming M Msgl time windows, and 3) noticing all devices to apply Msg1_Occasion_COUNTER minus 1.

"Message 1 Occasion (Msg1) Trigger (N)" (N ≥ 1): 1) claiming N Message 1 (Msg1) time windows, and 2) notifying all devices to apply Msgl_Occasion_COUNTER minus 1. (Msg1 occasion trigger (N)" (N ≥ 1) for: 1) claiming N Msgl time windows, and 2) noticing all devices to apply Msgl_Occasion_COUNTER minus 1.

"Message 2 (Msg2)" for: 1) claiming the start of the Msg3 occasion, and 3) noticing the devices, whose Msg1s are contained in this Msg2, to transmit Msg3 in the triggered Msg3 occasion.

The movements are described below.

### [Movements]

At the start of a slot:
the reader may empty its Msgl buffer and transmit "Slot trigger (M)" in the R2D spectrum.

The device receives "Slot trigger (M)" in the R2D spectrum and then decreases its Msg1_Occasion_COUNTER by 1.

If Msg1_Occasion_COUNTER = 0, it enters the Msgl occasion triggered by "Slot trigger (M)."

Otherwise, it keeps listening to the R2D spectrum if Msg1_Occasion_COUNTER > 0.

Once receiving "Slot trigger (M)" or "Msg1 occasion trigger (N)" in R2D spectrum, it decreases its Msg1_Occasion_COUNTER by 1.

If Msgl_Occasion_COUNTER = 0, is enters the Msgl occasion triggered by "Slot trigger (M)" or "Msg1 occasion trigger (N)."

In the Msgl occasion triggered by "Slot trigger (M)" or "Msg1 occasion trigger (N)" transmitted in the R2D spectrum by the reader:
The device randomly selects a resource among the following M (≥ 1) or N (≥ 1) Msgl time windows and Y channels and transmits Msgl and then keeps listening to the R2D spectrum.

The reader tries to decode the Msg1s and put the valid Msg1s into the Msgl buffer if the number of Msg1s in Msgl buffer is less than Y.

After a Msgl occasion triggered by "Slot trigger (M)" or "Msg1 occasion trigger (N)" transmitted in the R2D spectrum by the reader:
If the number of Msgl in the Msgl buffer is less than Y, there may down-select one of the two options:
Option 1: the reader may send a new "Msg1 occasion trigger (N)" in the R2D spectrum, where N can be different from previous ones.
Option 2: the reader may stop collecting Msgl and perform the same operations as in the situation "the number of Msgl in the Msgl buffer is more than Y."

Otherwise, the number of Msgl in the Msgl buffer is more than Y:

The reader sends "Msg2" in the R2D spectrum, which carries at most Y Msg1s.

The device receives "Msg2" on the R2D spectrum and checks.

If its Msg1 is in the received "Msg2":

If the "Msg2" appears after the "Slot trigger (M)" and M = 1, there may down-select one of the two options:
Option 1: the reader may transmit Msg3 in the Msg3 occasion with the same channel as its Msgl transmission.
Option 2: the reader may transmit Msg3 in the Msg3 occasion with the same channel order as its Msgl in "Msg2".

Otherwise, the reader transmits message 3 in the Msg3 occasion with the same channel order as its Msgl in "Msg2". Otherwise, its Msgl is not in the received "Msg2":
The reader keeps listening to the R2D spectrum and waits for the next frame triggered by a new "Paging (K)," where K can be different from previous ones.

### Third Embodiment

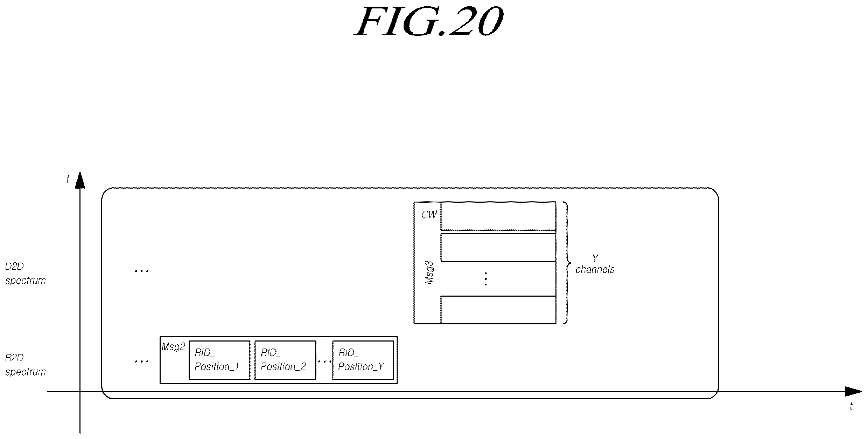

In another embodiment, with reference to FIG. 20, the maximum number of message 1 (Msg1) transmitted by the aforementioned message 2 (Msg2) is proposed .

Referring to FIG. 20, a Msg2 is transmitted in response to multiple Msgl transmissions, which is initiated by an R2D transmission triggering random access.

To support "Option 2", in which a PRDCH for Msg2 transmission corresponds to multiple A-IoT Msgl received from different devices, the maximum number of Msgl responses that can be carried within a PRDCH for Msg2 is equal to the number of available channels Y.

When the terminal performs the above-described embodiments 1 to 3, the terminal can perform a communication method (210) according to another embodiment described below.

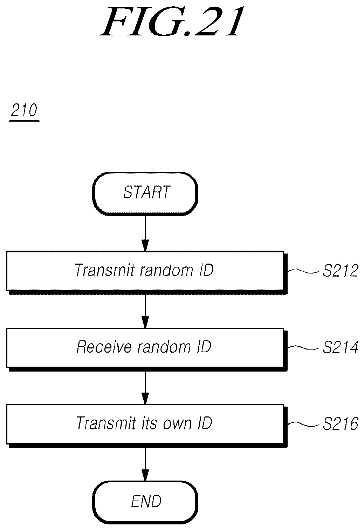

FIG. 21 is a flowchart of a communication method of a terminal according to another embodiment.

Referring to FIG. 21, a communication method 210 of a terminal according to another embodiment includes: transmitting a random ID through Message 1 (Msg1) over one of one or more available frequency channels to one or more Message 1 occasions at S212; receiving the random ID from a specific reader through Message 2 (Msg2) if the random ID is determined to be valid from the specific reader at S214; and transmitting its own unique ID through Message 3 (Msg1) at S216.

In the communication method 210 of the terminal according to another embodiment, the transmitting the random ID through the message 1 (Msg1) at S212, the receiving the random ID from the specific reader through the message 2 (Msg2) at S214, and the transmitting one's own unique ID through the message 3 (Msg3) at S216 correspond to the "3-step random access" used in the Ambient IoT. As mentioned above, 3GPP has decided to support only 3-step CBRA (contention-based RA) in the Ambient loT. Therefore, when two or more terminals access the same resource, no terminal can use the resource in the same resource according to the 3-step CBRA (contention-based RA). At this time, in the transmitting a random ID through the Message 1 (Msg1) at S212, the random ID may be transmitted through the Message 1 (Msg1) over one or more available frequency channels in one or more Message 1 occasions. Here, the one or more Message 1 occasions refer to one or more Message 1 occasions, and the one or more available frequency channels refer to one or more frequency channels.

As described above with reference to FIG. 19, the one or more Message 1 occasions support TDMA in Message 1 (Msg1) transmission. Specifically, the Message 1 (Msg1) occasions may include a Message 1 time window M (≥ 1), sufficient to transmit one Message 1 (Msg1). In the example described with reference to FIG. 19, the time period of the Message 1(Msg1) occasions is referred to as a slot trigger, and thus the present invention is not limited thereto. For example, as illustrated in FIGs. 16 and 17, the number of Message 1 occasions (M) may be 1 or 2, but it is not limited thereto.

Additionally, in the transmitting the random ID through the Message 1 (Msg1) at S212, one or more frequency channels support FDMA in the Message 1 transmission. The number of available frequency channels may be 2ⁿ (where n is a large natural number greater than or equal to 0) or, as described above with reference to FIG. 19, Y is a natural number greater than or equal to 1.

In the former case, the terminal may transmit the n value to the reader as n-bit control information or exchange this control information with the reader. In this case, the number of available frequency channels may be 1, 2, 4, 8, etc., and the maximum value may be predetermined.

In the latter case, the terminal may transmit the Y value as control information or exchange this control information with the reader. The Y value may be, for example, 1, 2, 3, 4, 5, 6, 7, 8, etc.

The number of available frequency channels may be dynamically or semi-statically designated. The sizes of each frequency channel may be the same or different, and some may be the same and the other may be different from each other.

As described above with reference to FIGs. 16 and 17, since RID_2 and RID_3 in the Message 1 (Msg1) in slot #0 may use the same frequency band, R2D can only include RID_1 and 4 in the single Message 2 (Msg2). In the Message 1 (Msg1) in slot #0, RID_1 and RID_4 may use non-overlapping frequency bands.

For example, if a specific terminal uses a non-overlapping frequency band for its ID in the Message 1 (Msg1), its RID will be included in the Message 2 (Msg2). Conversely, if another specific terminal uses a frequency band that overlaps its ID in the Message 1 (Msg1), its RID will not be included in the Message 2 (Msg2). The Message 2 may include responses to one or more Messages 1 (Msg1) received from one or more different terminals, and the maximum number of responses to the Message 1 (Msg1) carried in the Message 2 (Msg2) may be equal to the number of available frequency channels. As described above, the maximum number of Message 1 (Msg1) responses that can be carried within the PRDCH for the Message 2 (Msg2) may be equal to the number of available frequency channels Y.

For example, if four terminals each use four frequency channels in slot #0 and do not use the same channel, R2D may include RID_1 through 4 in the Message 2 (Msg2). Consequently, the maximum number of responses to the Message 1 (Msg1) carried in the Message 2 (Msg2) may be equal to the number of available frequency channels. The Message 1 may be transmitted on the Device-to-Reader channel (PDRCH), and the Message 2 (Msg2) may be transmitted on the Reader-to-Device channel (PRDCH).

In the transmitting its own unique ID at S216, the unique ID may be transmitted through the Message 3 (Msg3) via one or more available frequency channels for the single Message 3 occasion, or via another frequency channel. Since there is only one Message 3 occasion and one of two or more frequency channels may be used, the Message 3 (Msg3) may be transmitted using only FDMA, as described above.

The frequency channel used by the Message 3 (Msg3) may be explicitly indicated on the Reader-to-Device channel (PRDCH) for the Message 2 (Msg2) or determined based on a specific rule.

The number of frequency channels for the Message 3 occasion may be the same as, but is not limited to, the number of frequency channels for the Message 1 occasion. As described above with reference to FIGs. 16 and 17, Message 3 (Msg3) may only use frequency bands for RID_1 and RID_4, respectively. Similarly, a valid Message 1 (Msg1) may not be present in Slot #1.

If the received unique ID is invalid, receiving NACK information from a specific reader may be additionally included, but is not limited thereto.

As illustrated in FIGs. 19 and 20, the size of the time resource required to transmit the Message 1 (Msg1) over one or more available frequency channels in one or more Message 1 occasions may be smaller than the size of the time resource required to transmit the Message 3 over one or more available frequency channels in one or more Message 3 occasions.

In the transmitting the random ID at S216, the available channel may be dynamically selected. As described with reference to FIG. 20, a communication method (200) of a terminal according to another embodiment may transmit the random ID through the Message 1 (Msg1) through one or more available frequency channels in one or more message 1 occasions, thereby enabling more efficient use of time and frequency resources in the ambient IoT.

Referring again to FIG. 9, the terminal 1100 according to another embodiment includes the transmitter 1130 that transmits the random ID through the Message 1 (Msg1) over one or more available frequency channels among one or more Message 1 occasions and transmits its own unique ID through the Message 3 (Msg3), the receiver 1120 that receives the random ID from a specific reader through the Message 2 (Msg2) if the random ID is determined to be valid by the specific reader, and the control unit 1120 that controls the transmitter 1130 and the receiver 1110.

As described above, the number of Message 1 occasions may be 1 or 2, but it is not limited thereto.

As described above, the number of one or more available frequency channels may be 2ⁿ (where n is a large natural number greater than or equal to 0) or Y is a natural number greater than or equal to 1, but is not limited thereto. As described above, the Message 2 (Msg2) includes responses to one or more Messages 1 received from one or more different terminals, and the maximum number of responses to the Message 1 (Msg1) carried in the Message 2 (Msg2) may be equal to the number of available frequency channels.

The transmitter 1130 may transmit its unique ID through the Message 3 (Msg3) at one or more of the available frequency channels in one Message 3 occasion or at another frequency channel.

As described above, the size of the time resource required to transmit the Message 1 (Msg1) over one or more of the available frequency channels in one or more Message 1 occasions may be smaller than the size of the time resource required to transmit the Message 3 (Msg3) over one or more of the available frequency channels in one Message 3 occasion, but it is not limited thereto. In another embodiment, the terminal 1100 transmits the random ID through the message 1 (Msg1) over one or more available frequency channels in one or more message 1 occasions, thereby enabling more efficient use of time and frequency resources in the ambient IoT.

### Fourth Embodiment

As described above in the first to third embodiments, the transmission of the Message 1 (Msg1) is determined by a single R2D transmission that triggers the random access, and only the X=1 and X=2 time-domain resources may be supported for D2R transmissions for the Message 1 (Msg1).

Here, each D2R transmission for the Message 1 (Msg1) may occur on one of the X time-domain resources. Furthermore, the impact of specification support (at least including signaling overhead) for X=2 to a reader supporting only X=1 should be minimized.

Additionally, only X=1 time domain resources can be supported for D2R transmission of the Message 3 (Msg3) in response to a PRDCH for Message 2 (Msg2) transmission.

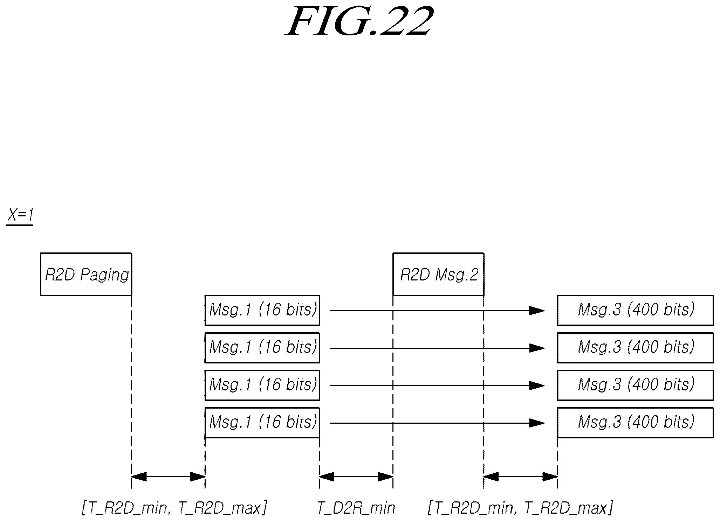

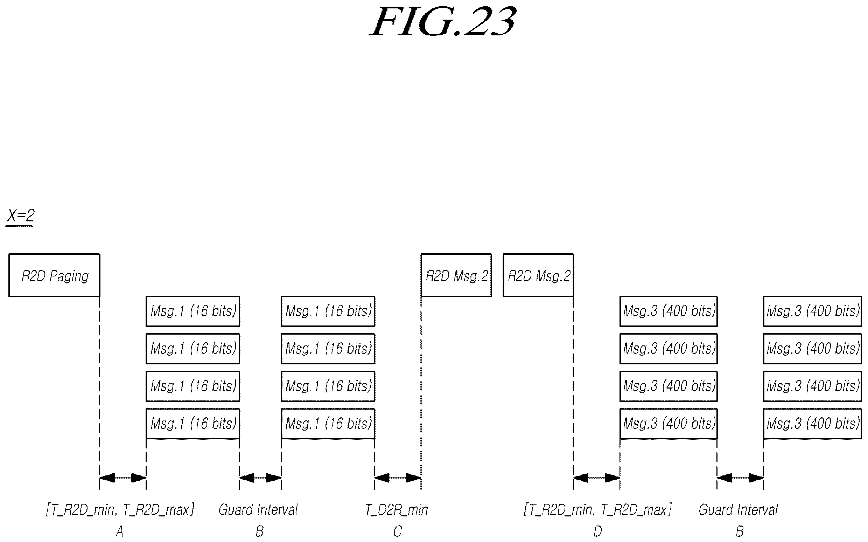

FIG. 22 illustrates ambient IoT communication when X is 1. FIG. 23 also illustrates ambient IoT communication when X=2.

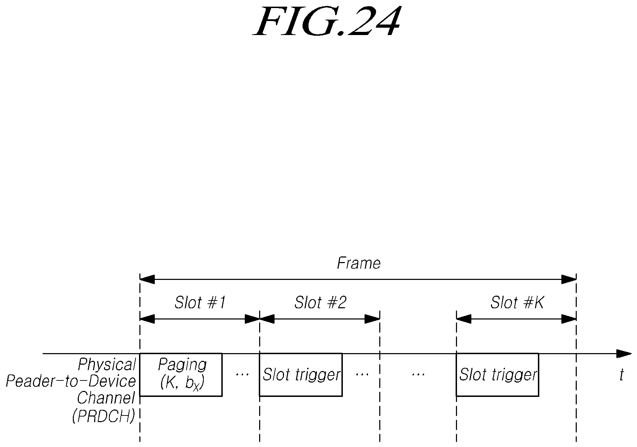

As one embodiment, with reference to FIG. 24, timing configurations for the Msgl transmission based on frame level are proposed.

### [Definition]

"Frame": A dynamically-length time duration triggered by "Paging (K, b_X)" (defined below), consisting of at least one slot (defined below), during which a device that successfully transmitted the Message 1 (Msg1) may complete a random access in that slot, and a device involved in a Message 1 (Msg1) collision may wait for the next frame.

"Slot": A time interval triggered by a "Slot Trigger" (defined by two options below), during which a device that chooses to transmit in that slot may perform a one-round, the 3-step RA. A slot is of dynamic length and may consist of at least one "Slot Trigger" transmission. Furthermore, a slot may contain at least one Message 1 (Msg1) time-domain resource, irrespective of whether a Message 2 (Msg2) transmission is followed by the Message 3 (Msg3).

Furthermore, triggers are described below.

### [Trigger]

"Paging (K, bx)" (bx = {0,1}) is transmitted by the reader over the Physical Reader-to-Device Channel (PRDCH) and serves the following purposes:
1) Requests the start of a frame.
2) Acknowledges a subset (or all) of devices for the random access.
3) Contains parameters that direct subsequent transmissions by the device.
4) Requests the slot number to be announced to the device through two options:
   (Option 1) The paging message contains a bit string directly representing the value of K.
   (Option 2) The paging message contains a bit string representing the number Q, which is .
5) The time-domain resource count for the Message 1 (Msg1) can be set to bx = 0 in slot X = 1, and bx = 1 in slot X = 2. The configured range can be scaled downwards through the following two options:
   the option 1 applies only to the first slot of the current frame, and the X value for the remaining slots can be configured by "Slot trigger (bx)" (defined below).
   The option 2 applies to all slots of the current frame, and the remaining slots can be triggered only by "Slot trigger (bx)" (defined below), which does not include a modified configuration for X.
6) The current frame can be aborted if necessary.

The "Slot trigger" transmitted by the reader over the Physical Reader-to-Device Channel (PRDCH) can choose from the following two options:
Option 1: "Slot Trigger (bx)" (bx={0,1}):
   1) Request the start of a slot,
   2) Set bx=0 to request the number of time-domain resources for the Message 1 (Msg1) for this slot, and set bx=1 to request X=2,
   3) Notify all devices to apply the value of Msg1_Occasion_COUNTER minus 1.
(Option 2) "Slot Trigger ()":
   1) Request the start of a slot,
   2) Notify all devices to apply the value of Msg1_Occasion_COUNTER minus 1.

"Paging (K, bx)" (bx={0,1}) can be transmitted by the reader over the physical reader-device channel (PRDCH), and "Slot Trigger" ("Slot Trigger (())" or "Slot Trigger (bx)" can be transmitted by the reader over the physical reader-device channel (PRDCH). ( "Paging (K, bx)" (bx={0,1}), transmitted over a Physical Reader-to-Device Channel (PRDCH) by the reader. "Slot trigger" ("Slot trigger ()" or "Slot trigger (bx)"), transmitted over a Physical Reader-to-Device Channel (PRDCH) by the reader.)

The present disclosure provides two cases for setting the timing of the message 1 (Msg1) transmission from a frame level perspective.

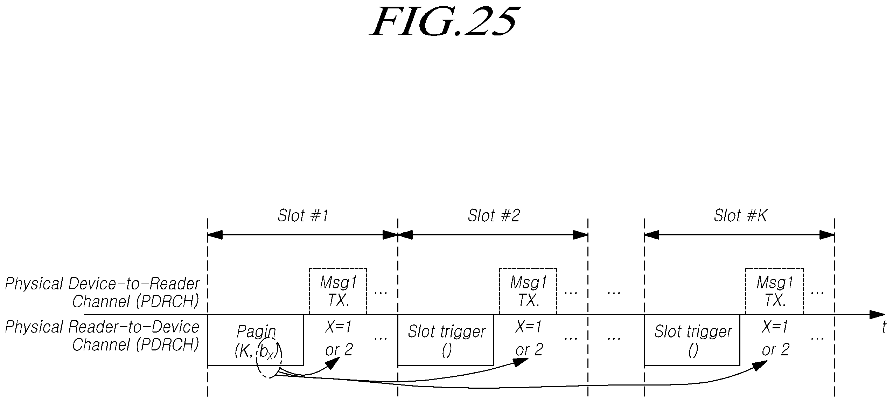

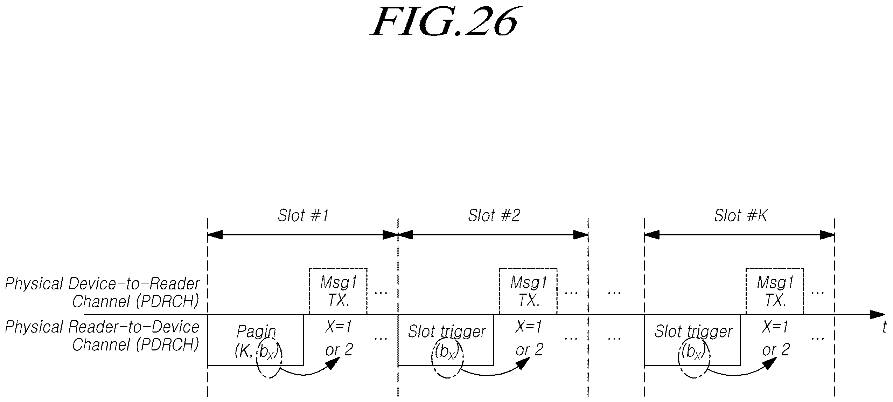

The first case is, as illustrated in FIG. 25, parameter bx in "Paging (K, bx)" controls the number of the Msgl time domain resources in all slots in the current frame. The second is the parameter bx in "Paging (K, bx)" only controls the number of the Msgl time domain resources in the first slot, while the number of Msgl time domain resources in other slots are controlled by their own "Slot trigger (bx)", as illustrated in FIG. 26.

### Fifth Embodiment

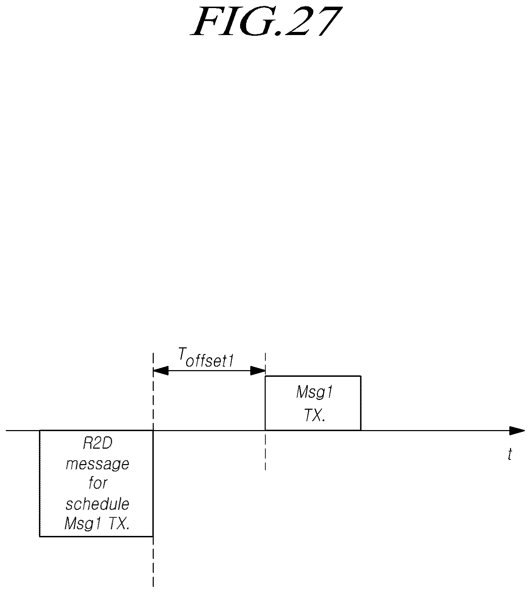

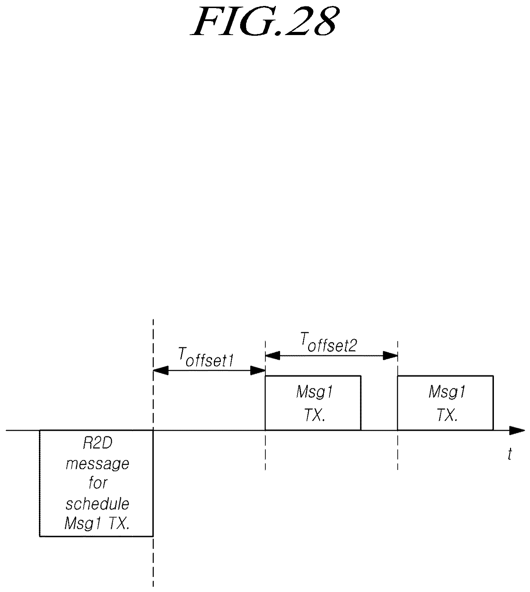

As another embodiment, referring to FIGs. 27 and 28, a slot-level-based transmission timing configuration of the message 1 (Msg1) is proposed.

FIG. 27 relates to timing configurations for message 1 (Msg1) transmission when X is 1, and FIG. 28 relates to timing configurations for message 1 (Msg1) transmission when X is 2.

### [Definition]

Toffset1 (existing definition, for system with X=1 and X=2): the starting time for the first Msgl time domain resource after the end of the corresponding R2D transmission triggering random access).

Toffset2 (existing definition, for system with =2 only): for determination of the starting time for the second Msgl time domain resource, derived based on the starting time of the first Msgl time domain resource plus offset2.

*T*_{I}≥0*:* the time for a reader to wait, when observing no UL transmissions after Toffset1 or Toffset1+ Toffset2, before it sends new R2D messages.

*T*_{B}≥0: the time for a reader to wait, when observing UL transmissions (Msg1 or Msg3), before it sends new R2D messages (Msg2 after Msgl).

*T*_{Msg1} 1: the time for reader to receive one Msg1.

Detail 1 (Determination of ): Toffset1 should be derived from the information contained (indicated implicitly) in the paging message.

### Detail 2 (Details in the system with X=1))

The devices, choosing to transmit in this slot, start the Msgl TX after Toffset1 once it receives the R2D trigger message. After the reader transmit a R2D message to trigger the next slot's Msgl transmission, if there is no device choose to transmit in this slot, the reader waits a time I after offset1 and then sends new R2D trigger (paging or slot trigger) to trigger a new slot.

Regarding detail 2, there can be three cases in a system where X = 1.

In Case 1, there is no device selecting the current slot.

For TI, there could be two options:)

(Option 1) TI is short, where *T*_{I}≤ *T*_{Msg1}.

(Option 2) Same as case 2, where *T*_{I}*=T*_{Msg1}*+T*_{B}.

In Case 2, there exist device(s) selecting the current slot, but reader does not find any valid RI.

In Case 3, there exist device(s) selecting the current slot, and reader can find valid RID(s).

Detail 3 (Details in the system with X=2))

### [Value range ofT_{offset2}≥T_{MSG1}

The devices, choosing to transmit Msgl in the first Msg1 time domain resource, start the Msgl TX after Toffset1 once it receives the R2D trigger message.

The devices, choosing to transmit Msg1 in the second Msgl time domain resource, start the Msgl TX after Toffset1+Toffset2 once it receives the R2D trigger message.

Regardless of whether any device transmits in the first Msgl time domain resource, to receive potential transmissions in the second Msgl time domain resource, the reader must wait for the full duration Toffset1+Toffset2 after the corresponding R2D transmission triggering random access.

Regarding detail 3, there can be five cases in a system where X = 2.

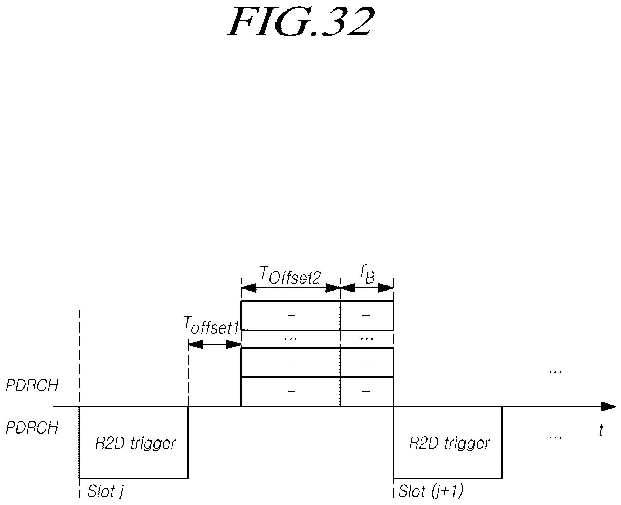

In case 1, as shown in FIG 32, for the first Msg 1TX there is no device, or with device but no successful Msg1 TX. For the second Msg 1TX, there is no device.

For T1, there could be two options.

(Option 1) T1 is short, where *T*_{I}≤*T*_{Msg1}.

(Option 2) Same as case 2, where *T*_{I}*= T*_{Msg1}+*T*_{B}.

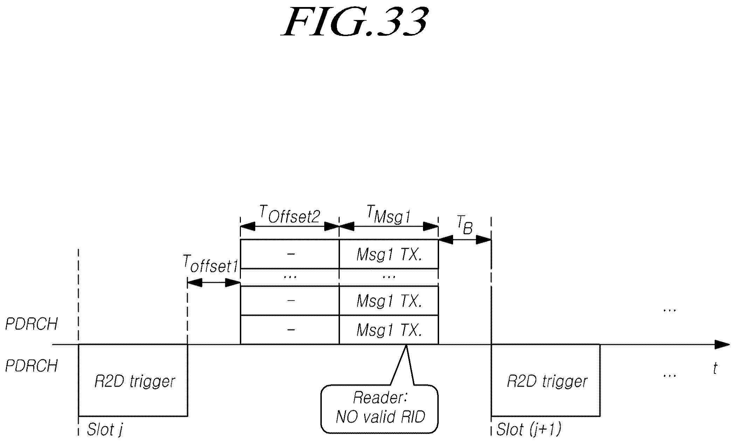

In case 2, as shown in FIG 33, for the first Msg 1TX, there is no device, or with device but no successful Msgl TX. For the second Msg 1TX there has a device but no successful Msgl TX.

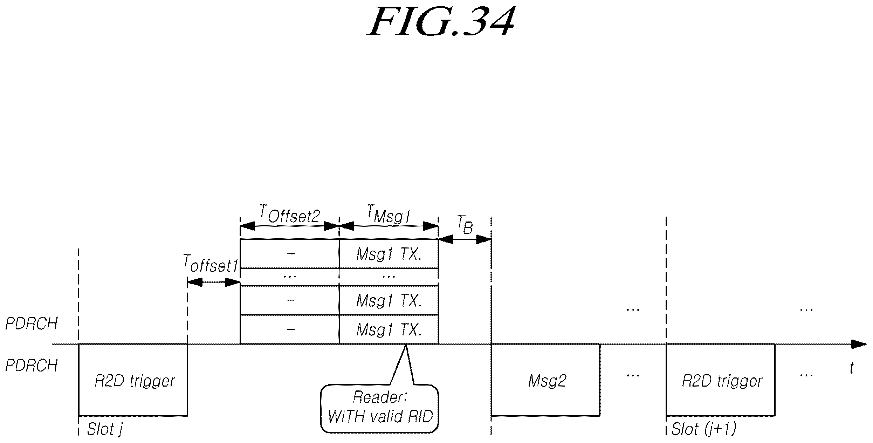

In case 3, as shown in FIG 34, for the first Msg 1TX, there is no device, or with device but no successful Msg1 TX. For the second Msg 1TX, there has a a device and at least one successful Msg1 TX.

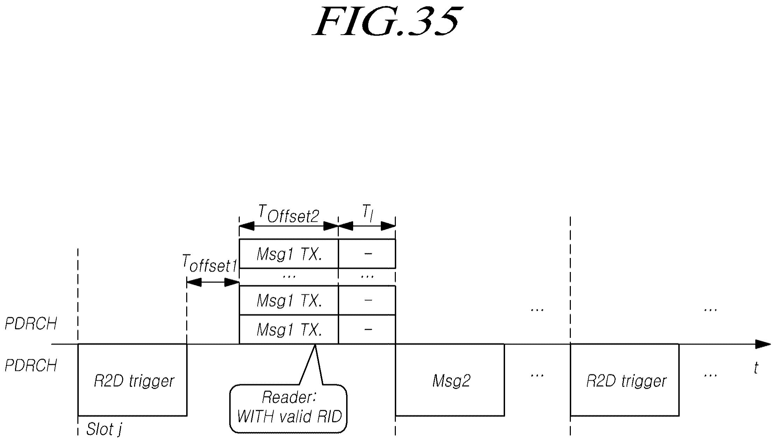

In case 4, as shown in FIG 35, for the first Msg 1TX, there is no device, or with device but no successful Msg1 TX. For the second Msg 1TX, there has a device and at least one successful Msgl TX.

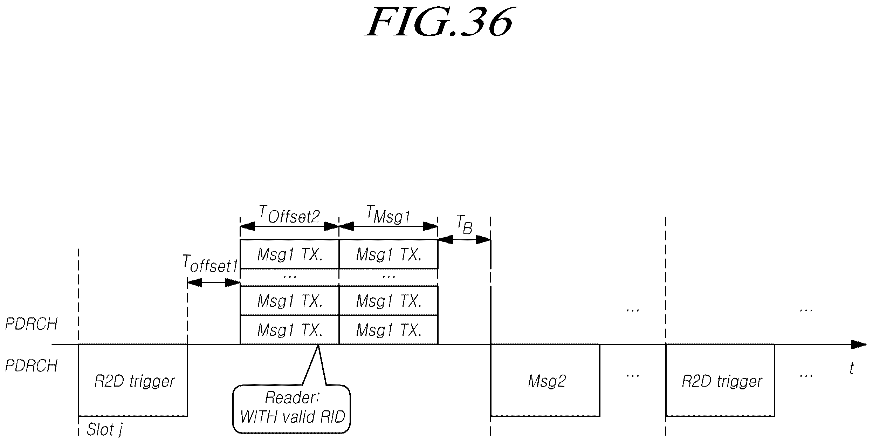

In case 5, as shown in FIG 36, for the first Msg 1TX, there is no device, or with device but no successful Msgl TX. For the second Msg 1TX, there has a device.

The aforementioned embodiments may operate independently or in combination. For example, the IoT operations of these embodiments 1 to 3 may be combined with the IoT operations of these embodiments 4 and 5 to perform the aforementioned terminal communication 210method of the terminal.

As described above, the ambient IoT of the first to fifth embodiments may be performed in accordance with the operations of the base station 1000 described with reference to FIG. 8 and the terminal 1100 described with reference to FIG. 9. That is, the base station 1000 and the terminal 1100 include a transceiver and a control unit. When transmitting and receiving signals or data in the first to fifth embodiments, the transceiver operates, and when processing these, the control unit operates.

When a terminal performs the aforementioned embodiments 4 and 5, a terminal communication method 3000 according to another embodiment described below can be performed.

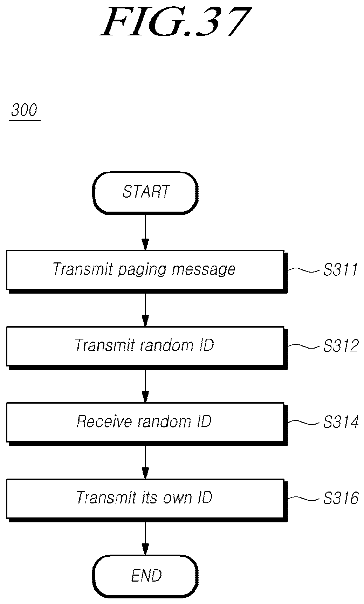

FIG. 37 is a flowchart of a terminal communication method according to another embodiment.

Referring to FIG 37, a communication method 300 of a terminal according to another embodiment includes: transmitting a paging message including first information regarding the number of Message 1 occasions X (X is 1 or more) and the number of available frequency channels Y (Y is 1 or more) at S311, transmitting a random ID as Message 1 (Msg 1) to X Message 1 occasions over the Y available frequency channels at S312, receiving the random ID from a specific reader through Message 2 (Msg 2) when the random ID is determined to be valid by the specific reader at S314, and transmitting its own unique ID through Message 3 (Msg 3) at S316.

In the transmitting a paging message at S311, the paging message may include second information regarding the start of the first set of the Message 1 (Msg 1). In this case, the paging message may include the second information along with the first information, but is not limited thereto.

The transmitting the random ID at S312, the receiving the random ID at S314, and the transmitting the unique ID with Message 3 (Msg 3) at S316 may be identical or substantially identical to the transmitting the random ID at S212, the receiving the random ID at S214, and transmitting the unique ID with the Message 3 (Msg 3) at S216 described with reference to FIG. 21. For example, in the communication method 300 of the terminal according to another embodiment, the transmitting a random ID through the message 1 (Msg1) at S312, the receiving the random ID from a specific reader through the message 2 (Msg2) , and the step (S316) of transmitting one's own unique ID as message 3 (Msg3) correspond to the "3-step random access" used in Ambient IoT. As mentioned above, 3GPP has decided to support only 3-step CBRA (contention-based RA) in Ambient IoT. Therefore, when two or more terminals access the same resource, no terminal can use the resource in the same resource according to the 3-step CBRA (contention-based RA). At this time, in the step (S312) of transmitting a random ID as Message 1 (Msg1), the random ID may be transmitted as Message 1 (Msg1) via one or more available frequency channels to one or more of the Message 1 occasions. At this time, the one or more Message 1 occasions refer to one or more Message 1 occasions, and the one or more available frequency channels refer to one or more frequency channels.

As described above with reference to FIG. 19, the one or more Message 1 occasions refer to supporting TDMA in Message 1 transmission. Specifically, the Message 1 occasions may include a Message 1 time window M (≥ 1) sufficient to transmit one Message 1. In the example described with reference to FIG. 19, the time period of the Message 1 occasions is referred to as a slot trigger, and thus the present invention is not limited thereto. For example, as illustrated in FIGS. 16 and 17, the number (X) of Message 1 occasions may be 1 or 2, but is not limited thereto. The number of frequency channels can be dynamically or semi-statically designated. The sizes of each frequency channel can be the same or different, or some can be the same and some can be different.

Message 1 can be transmitted on the Device-to-Reader channel (PDRCH), and Message 2 (Msg2) can be transmitted on the Reader-to-Device channel (PRDCH).

In the step of transmitting the unique ID (S316), the unique ID can be transmitted as Message 3 (Msg3) via one or more available frequency channels in a single Message 3 occasion, or via another frequency channel. Since there is only one Message 3 occasion and one of two or more frequency channels can be used, Message 3 (Msg3) can be transmitted solely via FDMA, as described above.

The frequency channel used by Message 3 (Msg3) may be explicitly indicated in the Reader-to-Device channel (PRDCH) for Message 2 (Msg2) or determined based on specific rules.

The number of frequency channels for Message 3 occasions may be the same as, but not limited to, the number of frequency channels for Message 1 occasions.

If the received unique ID is invalid, the method may additionally include, but is not limited to, receiving NACK information from a specific reader.

In the step of transmitting the unique ID (S216), an available channel may be dynamically selected. If the number of Message 1 occasions (M) is 2, the time interval from the R2D message scheduling Message 1 transmission to the start time of the first Message 1 is Toffset1, and the time interval from the start time of the first Message 1 to the start time of the second Message 1 is Toffset2, then Toffset2 can be obtained by Toffset1 and the time interval of the first Message 1.

A frame includes a first slot in which a paging message is transmitted and a next slot in which a slot trigger is transmitted, and the R2D message scheduling Message 1 transmission can be either the paging message in the first slot or the slot trigger in the next slot.

Toffset2 can be obtained by the following Mathematical Expression 1:

[Mathematical equation 1] ${T}_{offset 2} = {αT}_{offset 1} + {βT}_{msg 1}$

In Mathematical Expression 1, Tmsg1 represents the size of Message 1, and α and β can be real numbers. For example, α=0.25 and β=1.25, but the present invention is not limited thereto. Toffset1 may be signaled by a paging message, but is not limited thereto.

Message 2 includes one or more responses to Message 1 received from one or more different terminals, and the maximum number of responses to Message 1 carried in Message 2 may be equal to, but is not limited to, Y.

In the step of transmitting its own unique ID (S316), the unique ID is transmitted as Message 3 via one or more of the Y available frequency channels for a single Message 3 occasion, and the frequency channel used by Message 3 may be explicitly indicated in the Reader-to-Device channel (PRDCH) for Message 2 or determined based on a specific rule.

As described above, if the received unique ID is invalid, the step of receiving NACK information from a specific reader may additionally be included.

The size of the time resource for transmitting Message 1 through Y available frequency channels in X Message 1 occasions may be smaller than the size of the time resource for transmitting Message 3 through one or more of the available frequency channels in one Message 3 occasion, or another frequency channel, but is not limited thereto.

As described with reference to FIG. 37, a communication method (300) of a terminal according to another embodiment transmits a paging message including first information about the number of Message 1 occasions X (X is 1 or more) and the number of available frequency channels Y (Y is 1 or more), and second information about the start of the first set of Message 1, thereby enabling more efficient use of time and frequency resources in ambient IoT.

As described above, the ambient IoT of the fourth and fifth embodiments can be performed in accordance with the operation of the terminal (1100) described with reference to FIG. 9. That is, the terminal (1100) includes a transceiver (1110, 1130) and a control unit (1120). When transmitting and receiving signals or data in the fourth and fifth embodiments, the transceiver (1110, 1130) operates, and when processing is performed on these, the control unit (1120) operates. Referring again to FIG. 9, a terminal (1100) according to another embodiment transmits a paging message including first information about the number of Message 1 occasions X (where X is 1 or more) and the number of available frequency channels Y (where Y is 1 or more), and second information about the start of a first set of Message 1, and includes a transmitter (1130) that transmits a random ID as Message 1 through at least one of the available frequency channels to one or more of the Message 1 occasions and transmits its own unique ID as Message 3, a receiver (1120) that receives a random ID from a specific reader as Message 2 when the random ID is determined to be valid from the specific reader, and a control unit (1120) that controls the transmitter (1130) and the receiver (1110). As described above, the number of Message 1 occasions (X) may be 1 or 2, but is not limited thereto. The number of available frequency channels may be Y (where Y is a natural number greater than or equal to 1).

As described above, Message 2 (Msg2) includes responses to one or more Messages 1 received from one or more different terminals, and the maximum number of responses to Message 1 (Msg1) carried in Message 2 (Msg2) may be equal to the number of available frequency channels (Y).

The transmitter (1130) may transmit its unique ID as Message 3 (Msg3) via one or more of the available frequency channels in one Message 3 occasion. If the number of Message 1 occasions (M) is 2, the time interval from the R2D message scheduling Message 1 transmission to the start time of the first Message 1 is Toffset1, and the time interval from the start time of the first Message 1 to the start time of the second Message 1 is Toffset2, then Toffset2 can be obtained by Toffset1 and the time interval of the first Message 1.

A frame includes a first slot in which a paging message is transmitted and a next slot in which a slot trigger is transmitted, and the R2D message scheduling Message 1 transmission can be the paging message in the first slot or the slot trigger in the next slot.

As described above, Toffset2 can be obtained by the following Mathematical Formula 1. For example, α=0.25 and β=1.25, but is not limited thereto.

Toffset1 can be signaled by the paging message, but is not limited thereto. Message 2 includes one or more responses to Message 1 received from one or more different terminals, and the maximum number of responses to Message 1 carried in Message 2 may be equal to, but is not limited to, Y.

As described above, the time resource required to transmit Message 1 over Y available frequency channels for X Message 1 occasions may be less than the time resource required to transmit Message 3 over one or more available frequency channels for one Message 3 occasion, but is not limited thereto.

The receiving unit is a terminal that receives NACK information from the specific reader if the received unique ID is invalid.

In another embodiment, a terminal (1100) transmits a paging message that includes first information regarding the number of Message 1 occasions, X (where X is 1 or more), the number of available frequency channels, Y (where Y is 1 or more), and second information regarding the start of the first set of Message 1, thereby enabling more efficient use of time and frequency resources in ambient IoT.

The above-described embodiments may be supported by the standard documents disclosed in IEEE 802, 3GPP, and 3GPP2 which are radio access systems. In other words, steps, components, and parts not described to clarify the technical spirit in the embodiments may be supported by the above-described standard documents. Further, all the terms disclosed in the disclosure may be described by the standard documents disclosed above.

The present embodiments described above may be implemented through various means. For example, the present embodiments may be implemented by various means, e.g., hardware, firmware, software, or a combination thereof.

When implemented in hardware, the method according to the present embodiments may be implemented by, e.g., one or more application specific integrated circuits (ASICs), digital signal processors (DSPs), digital signal processing devices (DSPDs), programmable logic devices (PLDs), field programmable gate arrays (FPGAs), processors, controllers, micro-controllers, or micro-processors.

When implemented in firmware or hardware, the method according to the present embodiments may be implemented in the form of a device, procedure, or function performing the above-described functions or operations. The software code may be stored in a memory unit and driven by a processor. The memory unit may be positioned inside or outside the processor to exchange data with the processor by various known means.

The above-described terms, such as "system," "processor," "controller," "component," "module," "interface," "model," or "unit," described above may generally refer to computer-related entity hardware, a combination of hardware and software, software, or software being executed. For example, the above-described components may be, but are not limited to, processes driven by a processor, processors, controllers, control processors, entities, execution threads, programs, and/or computers. For example, both an application being executed by a controller or a processor and the controller or the processor may be the components. One or more components may reside within a process and/or thread of execution, and the components may be positioned in one device (e.g., a system, a computing device, etc.) or distributed in two or more devices.

The above-described embodiments are merely examples, and it will be appreciated by one of ordinary skill in the art various changes may be made thereto without departing from the scope of the present invention. Accordingly, the embodiments set forth herein are provided for illustrative purposes, but not to limit the scope of the present invention, and should be appreciated that the scope of the present invention is not limited by the embodiments. The scope of the disclosure should be construed by the following claims, and all technical spirits within equivalents thereof should be interpreted to belong to the scope of the disclosure.

## Claims

1. A communication method of a terminal, comprising:
transmitting a random ID through a message 1 over one of one or more available frequency channels in one of one or more message 1 occasions;
receiving the random ID from specific reader through a message 2 if the random ID is determined to be valid by the specific reader; and
transmitting its own unique ID through a message 3.

2. The communication method of the terminal according to claim 1, wherein the number of the message 1 occasions is 1 or 2.

3. The communication method of the terminal according to claim 2, wherein the number of one or more available frequency channels is 2n (n is a large natural number greater than or equal to 0) or Y (Y is a natural number greater than or equal to 1).

4. The communication method of the terminal according to claim 2, wherein the message 2 comprises a response to one or more messages 1 received from the one or more different terminals, and
the maximum number of responses to the message 1 carried in the message 2 is equal to the number of the available frequency channels.

5. The communication method of the terminal according to claim 1, wherein the message 1 is transmitted within a PDRCH(Device-to-Reader channel) and the message 2 is transmitted within a PRDCH(Reader-to-Device channel).

6. The communication method of the terminal according to claim 1, wherein in the transmitting the unique ID of the terminal, the unique ID of the terminal is transmitted within the message 3 through one or more of the available frequency channels or another frequency channel in one message 3 occasion.

7. The method of the terminal according to claim 5, wherein the frequency channel used by the message 3 is explicitly indicated in the PRDCH for the message 2 or is configured based on a specific rule.

8. The communication method of the terminal according to claim 1, further comprises receiving NACK information from the specific reader if the received unique ID is invalid.

9. The communication method of the terminal according to claim 1, wherein a size of a time resource for transmitting message 1 through one of the one or more available frequency channels in one of the one or more message 1 occasions is smaller than a size of a time resource for transmitting message 3 through one or more of the one or more available frequency channels or another frequency channel in one message 3 occasion.

10. The communication method of the terminal according to claim 1, wherein in the transmitting the random ID, the available frequency channel is dynamically selected.

11. A terminal, comprising:
a transmitter configured to transmit a random ID through a message 1 over one of one or more available frequency channels in one of one or more message 1 occasions and transmit its own unique ID through a message 3;
a receiver configured to receive the random ID from specific reader through a message 2 if the random ID is determined to be valid by the specific reader; and
a controller configured to control the transmitter and receiver.

12. The terminal according to claim 11, wherein the number of the message 1 occasions is 1 or 2.

13. The terminal according to claim 12, wherein the number of one or more available frequency channels is 2n (n is a large natural number greater than or equal to 0) or Y (Y is a natural number greater than or equal to 1).

14. The terminal according to claim 12, wherein the message 2 comprises a response to one or more messages 1 received from the one or more different terminals, and
the maximum number of responses to the message 1 carried in the message 2 is equal to the number of the available frequency channels.

15. The terminal according to claim 11, wherein in the transmitter transmits the unique ID within the message 3 through one or more of the available frequency channels or another frequency channel in one message 3 occasion.

16. The terminal according to claim 11, wherein a size of a time resource for transmitting message 1 through one of the one or more available frequency channels in one of the one or more message 1 occasions is smaller than a size of a time resource for transmitting message 3 through one or more of the one or more available frequency channels or another frequency channel in one message 3 occasion.
